# EUROPEAN PATENT APPLICATION

(11) **EP 4 357 936 A1**
(43) Date of publication of application: **24.04.2024**
(21) Application number: 22866518.8
(22) Date of filing: 02.09.2022
(51) Int. Cl.: G06F 16/29

(54) **MAP DISPLAY METHOD, ELECTRONIC DEVICE, AND SYSTEM**

(30) Priority: 07.09.2021 CN 202111046974
(71) Applicant: Huawei Technologies Co., Ltd., Shenzhen, Guangdong 518129 (CN)
(72) Inventor: LIAN, Zhihong, Shenzhen, Guangdong 518129 (CN); LI, Xuefeng, Shenzhen, Guangdong 518129 (CN)
(74) Representative: Isarpatent
(86) International application number: PCT/CN2022/116707
(87) International publication number: WO 2023/036055

(57) **Abstract**

This application provides a map display method, an electronic device, and a system, and relates to the field of terminal technologies. The method includes: When the electronic device needs to display a map image of specified coordinates, the electronic device may communicate and interact with a cloud server, and send a query request. After receiving the query request, the cloud server may obtain, based on the query request, specified coordinate information and a geographical area range with the specified coordinate information as a center. The cloud server obtains corresponding specified map data. The cloud server may generate a specified map image based on the specified map data, and then send the specified map image to the electronic device. After receiving the specified map image, the electronic device may display the specified map image.

## Description

This application claims priority to Chinese Patent Application No. 202111046974.X, filed with the China National Intellectual Property Administration on September 7, 2021 and entitled "MAP DISPLAY METHOD, ELECTRONIC DEVICE, AND SYSTEM", which is incorporated herein by reference in its entirety.

### TECHNICAL FIELD

This application relates to the field of terminal technologies, and in particular, to a map display method, an electronic device, and a system.

### BACKGROUND

With development of terminal technologies, electronic devices have been increasingly widely used in our daily life. A geographical location service provided by an electronic device, for example, displaying a map, querying geographical location information, and planning a navigation route by using the electronic device, has become an indispensable basic service.

Currently, the geographical location service is mainly provided by an electronic device that has high performance and rich processing resources. A mobile phone is a representative example. However, in some scenarios, when it is inconvenient for a user to use the mobile phone and the user needs the geographical location service, or when the user only needs to obtain a location of the electronic device, and does not need a further map service to increase load of the mobile phone, the user may obtain the foregoing service through a small portable electronic device such as a smartwatch. However, a processing capability and performance of the small portable electronic device are usually low. As a result, the small portable electronic device cannot efficiently provide the geographical location service for the user, and overall power consumption significantly increases.

### SUMMARY

This application provides a map display method, an electronic device, and a system. According to technical solutions provided in this application, power consumption of the electronic device is reduced, so that the electronic device provides a map display service for a user more efficiently and more conveniently.

According to a first aspect, this application provides a map display method. The method may include: A first electronic device receives a first operation. In response to the first operation, the first electronic device sends a first query request to a cloud server. The first query request includes first geographical information of a second electronic device, and the first geographical information is used to generate a first map image. The first electronic device receives the first map image. The first electronic device displays the first map image. In this way, power consumption of the electronic device is reduced, so that the electronic device provides a map display service for a user more efficiently and more conveniently.

In a possible implementation, the first query request is used to request the cloud server to generate the first map image based on the first geographical information.

In a possible implementation, the first operation acts on a map application, an interface of a device search function, or an interface of locating a current location of the first electronic device.

In a possible implementation, the first geographical information includes a geographical location or longitude and latitude information.

In a possible implementation, the second electronic device and the first electronic device are different electronic devices.

In a possible implementation, the second electronic device and the first electronic device are a same electronic device.

In a possible implementation, the method further includes: The first electronic device receives a second operation. In response to the second operation, the first electronic device obtains second geographical information, and sends a first instruction to the cloud server. The first instruction includes the first geographical information and the second geographical information. The first instruction is used to trigger the cloud server to generate a second map image based on the first geographical information and the second geographical information. The first electronic device receives the second map image. The first electronic device displays the second map image. The second map image includes an identifier of a route from the second geographical information to the first geographical information. In this way, power consumption of the electronic device is reduced, so that the electronic device displays a route on a navigation map for the user more efficiently and more conveniently.

In a possible implementation, the method further includes: The first electronic device receives a third operation. In response to the third operation, the first electronic device obtains first percentage information and third geographical information, and sends a second instruction to the cloud server. The second instruction includes the third geographical information and the first percentage information. The second instruction is used to trigger the cloud server to generate a third map image based on the third geographical information and the first percentage information. The first electronic device receives the third map image. The first electronic device displays the third map image. The third map image is a scaled-up or scaled-down map image based on the first map image. In this way, power consumption of the electronic device is reduced, so that the electronic device displays the scaled-up or scaled-down map image for the user more efficiently and more conveniently.

In a possible implementation, the method further includes: The first electronic device receives a fourth operation. In response to the fourth operation, the first electronic device sends a third instruction to the cloud server. The third instruction includes first displacement information and fourth geographical information. The third instruction is used to trigger the cloud server to generate a fourth map image based on the first displacement information and the fourth geographical information. The first electronic device receives the fourth map image. The first electronic device displays the fourth map image. The fourth map image is a map image obtained by moving the first map image. In this way, power consumption of the electronic device is reduced, so that the electronic device displays, for the user more efficiently and more conveniently, the map image obtained by moving the image.

In a possible implementation, the method further includes: The first electronic device stores the first map image. In this way, when displaying the first map image again, the first electronic device may directly invoke the first map image in local memory space, to improve image display efficiency.

In a possible implementation, before the first electronic device receives the first operation, the method further includes: logging in to a first account on the first electronic device; and logging in to a second account on the second electronic device. The first account and the second account are a same account, or the first account and the second account are associated accounts. In this way, the first electronic device can obtain the geographical information of the second electronic device more conveniently.

In a possible implementation, the method further includes: The first electronic device receives a fifth operation. In response to the fifth operation, the first electronic device sends a second query request to the cloud server. The second query request includes a device identifier of the second electronic device. The device identifier of the second electronic device is used to obtain the first geographical information. The second query request is used to trigger the cloud server to generate a fifth map image based on the first geographical information. The first electronic device receives the fifth map image. The first electronic device displays the fifth map image. The fifth map image includes a geographical location of the second electronic device. In this way, power consumption of the electronic device is reduced, so that the electronic device provides the map display service for the user more efficiently and more conveniently.

According to a second aspect, this application provides a communication system, including a first electronic device and a cloud server. The first electronic device is configured to receive a first operation. The first electronic device is further configured to: in response to the first operation, send a first query request to the cloud server. The first query request includes first geographical information of a second electronic device. The cloud server is configured to: in response to the first query request, generate a first map image based on the first geographical information. The cloud server is further configured to send the first map image to the first electronic device. The first electronic device is further configured to display the first map image after receiving the first map image. In this way, power consumption of the electronic device is reduced, so that the electronic device provides a map display service for a user more efficiently and more conveniently.

In a possible implementation, the first operation acts on a map application, an interface of a device search function, or an interface of locating a current location of the first electronic device.

In a possible implementation, the first geographical information includes a geographical location or longitude and latitude information.

In a possible implementation, the second electronic device and the first electronic device are different electronic devices.

In a possible implementation, the second electronic device and the first electronic device are a same electronic device.

In a possible implementation, the first electronic device is further configured to receive a second operation. The first electronic device is further configured to: in response to the second operation, obtain second geographical information, and send a first instruction to the cloud server. The first instruction includes the first geographical information and the second geographical information. The cloud server is further configured to: in response to the first instruction, generate a second map image based on the first geographical information and the second geographical information. The cloud server is further configured to send the second map image to the first electronic device. The first electronic device is further configured to display the second map image after receiving the second map image. The second map image includes an identifier of a route from the second geographical information to the first geographical information. In this way, power consumption of the electronic device is reduced, so that the electronic device displays a route on a navigation map for the user more efficiently and more conveniently.

In a possible implementation, the first electronic device is further configured to receive a third operation. The first electronic device is further configured to: in response to the third operation, obtain first percentage information and third geographical information, and send a second instruction to the cloud server. The second instruction includes the third geographical information and the first percentage information. The cloud server is further configured to: in response to the second instruction, generate a third map image based on the third geographical information and the first percentage information. The cloud server is further configured to send the third map image to the first electronic device. The first electronic device is further configured to display the third map image after receiving the third map image. The third map image is a scaled-up or scaled-down map image based on the first map image. In this way, power consumption of the electronic device is reduced, so that the electronic device displays the scaled-up or scaled-down map image for the user more efficiently and more conveniently.

In a possible implementation, the first electronic device is further configured to receive a fourth operation. The first electronic device is further configured to: in response to the fourth operation, send a third instruction to the cloud server. The third instruction includes first displacement information and fourth geographical information. The cloud server is further configured to: in response to the third instruction, generate a fourth map image based on the first displacement information and the fourth geographical information. The cloud server is further configured to send the fourth map image to the first electronic device. The first electronic device is further configured to display the fourth map image after receiving the fourth map image. The fourth map image is a map image obtained by moving the first map image. In this way, power consumption of the electronic device is reduced, so that the electronic device displays, for the user more efficiently and more conveniently, the map image obtained by moving the image.

In a possible implementation, the first electronic device is further configured to store the first map image. In this way, when displaying the first map image again, the first electronic device may directly invoke the first map image in local memory space, to improve image display efficiency.

According to a third aspect, this application provides an electronic device, and the electronic device is a first electronic device, including a display, a communication apparatus, a memory, a processor coupled to the memory, a plurality of applications, and one or more programs. When the processor executes the one or more programs, the first electronic device is enabled to perform the method in any possible implementation of the first aspect. In this way, power consumption of the electronic device is reduced, so that the electronic device provides a map display service for a user more efficiently and more conveniently.

According to a fourth aspect, this application provides a computer storage medium. The storage medium stores a computer program. The computer program includes executable instructions. When the executable instructions are executed by a processor, the processor is enabled to perform the method in any possible implementation of the first aspect.

According to a fifth aspect, this application further provides a computer program product. When the computer program product is run on a first electronic device, the first electronic device is enabled to perform the method in any possible implementation of the first aspect. In this way, power consumption of the electronic device is reduced, so that the electronic device provides a map display service for a user more efficiently and more conveniently.

### BRIEF DESCRIPTION OF DRAWINGS

FIG. 1 is a schematic diagram of an architecture of a communication system 10 according to an embodiment of this application;
FIG. 2A is a schematic diagram of a hardware structure of an electronic device according to an embodiment of this application;
FIG. 2B is a schematic diagram of a hardware structure of a cloud server according to an embodiment of this application;
FIG. 3 is a schematic modular diagram of an electronic device according to an embodiment of this application;
FIG. 4 is a schematic flowchart of a map display method according to an embodiment of this application;
FIG. 5A to FIG. 5D are schematic diagrams of a group of user interfaces according to an embodiment of this application;
FIG. 6A and FIG. 6B are a schematic flowchart of another map display method according to an embodiment of this application;
FIG. 7A to FIG. 7D are schematic diagrams of a group of user interfaces according to an embodiment of this application;
FIG. 8 is a schematic flowchart of another map display method according to an embodiment of this application;
FIG. 9A and FIG. 9B are schematic diagrams of a group of user interfaces according to an embodiment of this application;
FIG. 10 is a schematic flowchart of another map display method according to an embodiment of this application;
FIG. 11A and FIG. 11B are schematic diagrams of a group of user interfaces according to an embodiment of this application;
FIG. 12 is a schematic flowchart of another map display method according to an embodiment of this application;
FIG. 13A and FIG. 13B are schematic diagrams of a group of user interfaces according to an embodiment of this application;
FIG. 14A and FIG. 14B are a schematic flowchart of another map display method according to an embodiment of this application;
FIG. 15A to FIG. 15G are schematic diagrams of a group of user interfaces according to an embodiment of this application; and
FIG. 16 is a schematic diagram of a software structure according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification only describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are only intended for a purpose of description, and should not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

**First, a schematic diagram of an architecture of a communication system 10 according to an embodiment of this application is described.**

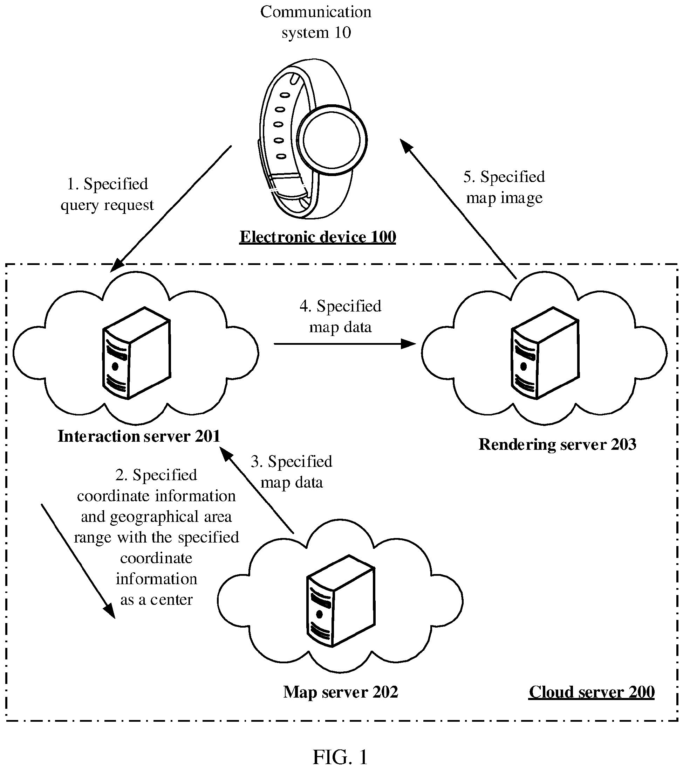

FIG. 1 shows an example of an architecture of a communication system 10 according to an embodiment of this application.

As shown in FIG. 1, the communication system 10 may include an electronic device 100 and a cloud server 200. The cloud server 200 may include an interaction server 201, a map server 202, and a rendering server 203.

The electronic device 100 may be a type of an electronic device that has a weak computing and processing capability and/or small internal memory space, for example, a smartwatch or a smart band. In the communication system 10, the electronic device 100 may send a specified query request to the interaction server 201 in the cloud server 200. The specified query request may include specified coordinate information and an identity document (which may also be referred to as a device identifier, Identity document, ID) of the electronic device 100. In a possible implementation, the specified coordinate information may be coordinate information of a geographical location of the electronic device 100. In a possible implementation, the specified coordinate information may be coordinate information of a geographical location of another specified electronic device (for example, an electronic device 200) that is different from the electronic device 100. In a possible implementation, the specified coordinate information may alternatively be coordinate information obtained by the electronic device 100 in response to an input of a user. The electronic device 100 may receive a specified map image that corresponds to specified coordinate information sent by the rendering server 203. The electronic device 100 may display the specified map image.

In some embodiments, when the electronic device 100 needs to display a geographical location image of a specified electronic device (for example, the electronic device 200), the specified query request may include an ID of the specified electronic device, so that the interaction server 201 can obtain, through query and based on the ID, specified coordinate information of a geographical location of the specified electronic device.

The interaction server 201 may receive the specified query request sent by the electronic device 100. For description of the specified query request, refer to the foregoing related description. Details are not described herein again. The interaction server 201 may send a specified data request to the map server 202 based on the specified query request. The specified data request includes the specified coordinate information and a geographical area range with the specified coordinate information as a center (for example, within a range with the specified coordinate information as a center and 10 kilometers as a radius), so that the map server 202 queries specified map data (for example, coordinate information in the geographical area range, and a geographical location name and road data that correspond to each piece of the coordinate information) in the geographical area range. The interaction server 201 may receive the specified map data sent by the map server 202, and send the specified map data to the rendering server 203, so that the rendering server 203 may generate the specified map image based on the specified map data.

The map server 202 may receive the specified data request sent by the interaction server 201. For description of the specified data request, refer to the foregoing related description. Details are not described herein again. The map server 202 may obtain, through query and based on the specified data request, the specified map data corresponding to the geographical area range with the specified coordinate information as the center. The map server 202 may send the specified map data to the interaction server 201.

The rendering server 203 may receive the specified map data and the ID of the electronic device 100 that are sent by the interaction server 201. The rendering server 203 may generate the corresponding specified map image based on the specified map data. The rendering server 203 may send the specified map image to the electronic device 100 based on the ID of the electronic device 100, so that the electronic device 100 can display the map image. In a possible implementation, the rendering server 203 may send the generated specified map image to the interaction server 201, and then the interaction server 201 sends the specified map image to the electronic device 100, so that the electronic device 100 displays the specified map image.

In some embodiments, the interaction server 201, the map server 202, and the rendering server 203 in the cloud server 200 may be combined in pairs, or the interaction server 201, the map server 202, and the rendering server 203 may alternatively be integrated into one server, or the interaction server 201, the map server 202, and the rendering server 203 may be located in different servers. For example, after the interaction server 201 is combined with the map server 202, when the electronic device 100 needs to display a map image of a location of the electronic device 200, the electronic device 100 may send an ID of the electronic device 200 to the interaction server 201, and the interaction server 201 may obtain, through query and based on the ID of the electronic device 200, specified coordinate information corresponding to the location of the electronic device 200. This is not limited in this application.

In some embodiments, the electronic device 100 may alternatively be a type of an electronic device that has a strong computing and processing capability and abundant internal memory space, for example, a smartphone, a tablet computer, or a desktop computer. This is not limited in this application.

It should be noted that the coordinate information (also referred to as geographical information) in the foregoing and subsequent embodiments may be a geographical location (for example, a geographical name), or may be longitude and latitude information, plane coordinate information, or spherical coordinate information. This is not limited in this application.

**The following describes a schematic diagram of a structure of an electronic device 100 according to this application.**

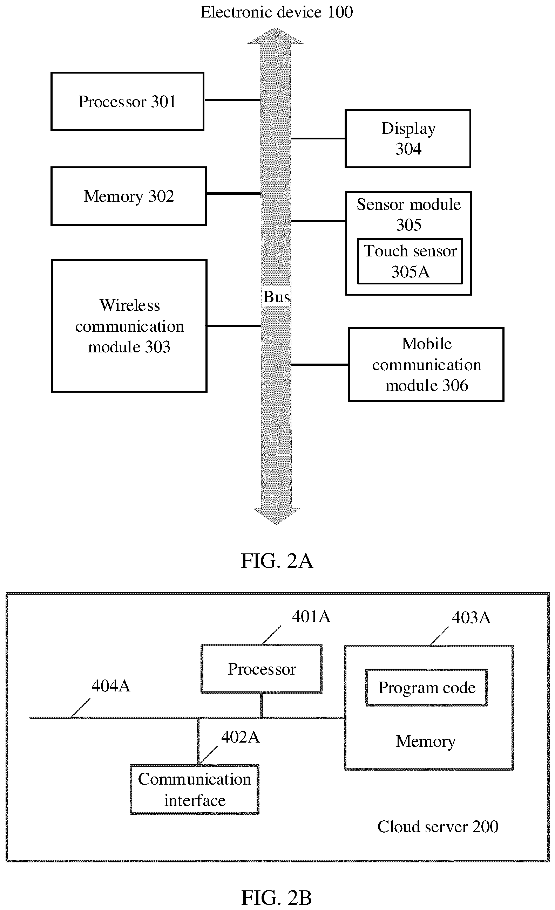

FIG. 2A shows an example of a schematic diagram of a hardware structure of an electronic device 100 according to an embodiment of this application.

The electronic device 100 may include a processor 301, a memory 302, a wireless communication module 303, a display 304, a sensor module 305, a mobile communication module 306, and the like. The foregoing modules may be connected by using a bus or in another manner. In an example of this embodiment of this application, the bus is used for connection.

It may be understood that the structure shown in this embodiment of this application does not constitute a specific limitation on the electronic device 100. In some other embodiments of this application, the electronic device 100 may further include more or fewer components than those shown in the figure, or some components may be combined, or some components may be split, or different component arrangements may be used. The components shown in the figure may be implemented in hardware, software, or a combination of software and hardware.

The processor 301 may include one or more processing units. For example, the processor 301 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control on instruction fetching and execution.

A memory may be further disposed in the processor 301, and is configured to store instructions and data. In some embodiments, the memory in the processor 301 is a cache. The memory may store instructions or data that has been used or cyclically used by the processor 301. If the processor 301 needs to use the instructions or the data again, the processor 301 may directly invoke the instructions or the data from the memory. This avoids repeated access, reduces waiting time of the processor 301, and improves system efficiency.

In some embodiments, the processor 301 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface and/or the like.

The memory 302 is coupled to the processor 301, and is configured to store various software programs and/or a plurality of groups of instructions. During specific implementation, the memory 302 may include a volatile memory (volatile memory), for example, a random access memory (random access memory, RAM); or may include a non-volatile memory (non-volatile memory), for example, a ROM, a flash memory (flash memory), a hard disk drive (Hard Disk Drive, HDD), or a solid state drive (Solid State Drive, SSD). The memory 302 may further include a combination of the foregoing types of memories. The memory 302 may further store some program code, so that the processor 301 invokes the program code stored in the memory 302, to implement a method for implementing embodiments of this application in the electronic device 100. The memory 302 may store an operating system, for example, an embedded operating system such as uCOS, VxWorks, or RTLinux.

The wireless communication module 303 may provide a wireless communication solution that is applied to the electronic device 100 and that includes one or more of a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 303 may be one or more devices integrating at least one communication processing module. The wireless communication module 303 receives an electromagnetic wave through an antenna, performs frequency modulation and filtering processing on an electromagnetic wave signal, and sends the processed signal to the processor 301. The wireless communication module 303 may further receive a to-be-sent signal from the processor 301, perform frequency modulation and amplification on the signal, and convert the signal into an electromagnetic wave for radiation through the antenna. In some embodiments, the electronic device 100 may further detect or scan a device near the electronic device 100 by transmitting a signal through a Bluetooth module (not shown in FIG. 1) and a WLAN module (not shown in FIG. 1) in the wireless communication module 303, establish a wireless communication connection to the nearby device and transmit data. The Bluetooth module may provide a Bluetooth communication solution including one or more of classic Bluetooth (basic rate/enhanced data rate, BR/EDR) or Bluetooth low energy (Bluetooth low energy, BLE). The WLAN module may provide a WLAN communication solution including one or more of Wi-Fi direct, Wi-Fi LAN, or Wi-Fi softAP.

The display 304 may be configured to display an image, a video, and the like. The display 304 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 304. N is a positive integer greater than 1.

The sensor module 305 may include a touch sensor 305A and the like. The touch sensor 305A may also be referred to as a "touch device". The touch sensor 305A may be disposed on the display 304, and the touch sensor 305A and the display 304 form a touchscreen, which is also referred to as a "touchscreen". The touch sensor 305A may be configured to detect a touch operation performed on or near the touch sensor 305A. Optionally, the sensor module 305 may further include a gyroscope sensor (not shown in FIG. 1), an acceleration sensor (not shown in FIG. 1), and the like. The gyroscope sensor may be configured to determine a motion posture of the electronic device 100. In some embodiments, the electronic device 100 may determine, by using the gyroscope sensor, angular velocities of the electronic device 100 around three axes (that is, x, y, and z axes). The acceleration sensor may be configured to detect magnitudes of accelerations of the electronic device 100 in various directions (usually on the x, y, and z axes). When the electronic device 100 is still, a magnitude and a direction of gravity may be detected.

The mobile communication module 306 may provide a solution applied to the electronic device 100 for wireless communication such as 2G/3G/4G/5G.

It should be noted that FIG. 2A is merely used as an example to explain this application, and does not constitute a specific limitation on this application.

**The following describes a schematic diagram of a hardware structure of a cloud server 200 according to an embodiment of this application.**

FIG. 2B shows an example of a schematic diagram of a hardware structure of a cloud server 200 according to an embodiment of this application.

As shown in FIG. 2B, the cloud server 200 may be used in the communication system 10 described in FIG. 1. The cloud server 200 may include one or more processors 401A, a communication interface 402A, and a memory 403A. The processor 401A, the communication interface 402A, and the memory 403A may be connected by using a bus or in another manner. In an example of this embodiment of this application, the bus 404A is used for connection.

The processor 401A may include one or more general-purpose processors, for example, a CPU. The processor 401A may be configured to run program code related to a device control method.

The communication interface 402A may be a wired interface (for example, an Ethernet interface) or a wireless interface (for example, a cellular network interface), and is configured to communicate with another node.

In this embodiment of this application, the cloud server 200 may specifically include an interaction server 201, a map server 202, and a rendering server 203. In the interaction server 201, the communication interface 402A may be specifically configured to communicate with an electronic device 100, the map server 202, and the rendering server 203, for example, receive a specified query request sent by the electronic device 100 (for description of the specified query request, refer to related description in the communication system 10 shown in FIG. 1, and details are not described herein again), send a specified data request to the map server 202 based on the specified query request (for description of the specified data request, refer to related description in the communication system 10 shown in FIG. 1, and details are not described herein again), receive specified map data (for example, coordinate information in a geographical area range, and a geographical location name and road data that correspond to each piece of the coordinate information) that corresponds to the geographical area range with specified coordinate information as a center and that is sent by the map server 202, and send the specified map data to the rendering server 203. In the map server 202, the communication interface 402A may be specifically configured to communicate with the electronic device 100 and the interaction server 201, for example, receive the specified data request sent by the interaction server 201 (for description of the specified data request, refer to related description in the communication system 10 shown in FIG. 1, and details are not described herein again), and send, to the interaction server 201, the specified map data (for example, the coordinate information in the geographical area range, and the geographical location name and the road data that correspond to each piece of the coordinate information) that corresponds to the geographical area range with the specified coordinate information as the center. In the rendering server 203, the communication interface 402A may be specifically configured to communicate with the electronic device 100 and the interaction server 201, for example, receive the specified map data (for example, the coordinate information in the geographical area range with the specified coordinate information as the center, and the geographical location name and the road data that correspond to each piece of the coordinate information) sent by the interaction server 201, and send, to the electronic device 100, a specified map image generated based on the specified map data.

The memory 403A may include a volatile memory (volatile memory), for example, a random access memory (random access memory, RAM); or may include a non-volatile memory (non-volatile memory), for example, a ROM, a flash memory (flash memory), a hard disk drive (Hard Disk Drive, HDD), or a solid state drive (Solid State Drive, SSD). The memory 403A may further include a combination of the foregoing types of memories. The memory 403A may further store some program code, so that the processor 401A invokes the program code stored in the memory 403A, to implement a method for implementing embodiments of this application in the cloud server 200.

In this embodiment of this application, the cloud server 200 may specifically include the interaction server 201, the map server 202, and the rendering server 203. In the map server 202, the memory 403A may be specifically further configured to store map data of one or more areas, and the map data of the one or more areas may include the specified map data corresponding to the geographical area range with the specified coordinate information as the center. In the rendering server 203, the memory 403A may be specifically further configured to store one or more map images, and the one or more map images may include the specified map image corresponding to the geographical area range with the specified coordinate information as the center.

It should be noted that the cloud server 200 shown in FIG. 2B is merely an implementation in embodiments of this application. During actual application, the cloud server 200 may alternatively include more or fewer components. This is not limited herein.

**The following describes a map display procedure according to an embodiment of this application.**

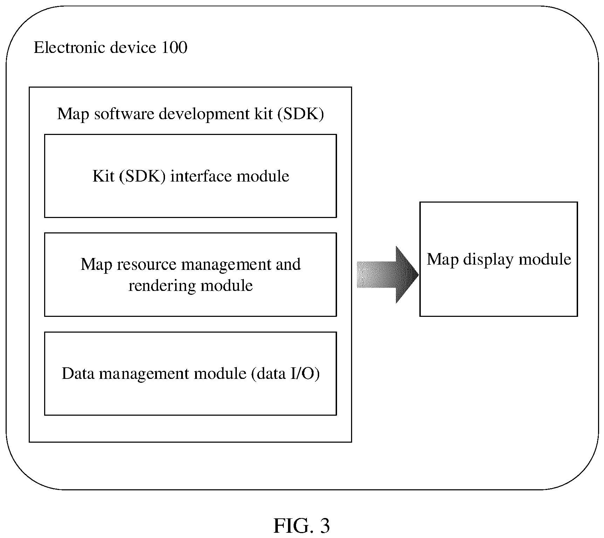

As shown in FIG. 3, an electronic device 100 may include a map software development kit (software development kit, SDK) and a map display module. The map SDK module may include an SDK interface module, a map resource management and rendering module, and a data management module (which may also be referred to as data I/O). The data I/O module may be configured to obtain map resource data of specified coordinate information. The map resource management and rendering module may generate a map image of the specified coordinate information based on the map resource data of the specified coordinate information that is obtained by the data I/O module. The SDK interface module may be configured to communicate with the map display module, and send, to the map display module, map image data generated in the map resource management and rendering module. The map display module may display the map image of the specified coordinate information based on the map image data.

For example, when the electronic device 100 displays, in response to an input of a user, a map of the specified coordinate information, the electronic device 100 may obtain map resource data 1 (for example, coordinate information and a corresponding geographical location name in a geographical area range with the specified coordinate information as a center) of the specified coordinate information based on the data I/O module. Then, the map resource management and rendering module may generate a corresponding specified map image based on the map resource data 1 and a specified map image type (for example, a map image style and a text annotation). The SDK module may communicate with the map display module, and send the specified map image, so that the map display module can display the specified map image on a display of the electronic device 100.

Therefore, it may be learned that, in the foregoing map display procedure, the electronic device 100 needs a strong computing and processing capability and a strong memory resource, power consumption of the electronic device 100 is high, and processing steps of the electronic device 100 are cumbersome. Consequently, the electronic device 100 cannot provide a map display service for the user efficiently.

**Therefore, an embodiment of this application provides a map display method.**

When an electronic device 100 needs to display a map image of specified coordinate information (for example, coordinates of a geographical location of the electronic device 100, coordinates of a geographical location of an electronic device 200, and specified coordinates based on an input of a user), the electronic device 100 may communicate and interact with a cloud server 200, and send a specified query request. For description of the specified query request, refer to the related description in the embodiment of the communication system 10 shown in FIG. 1. Details are not described herein again. After receiving the specified query request, the cloud server 200 may obtain, based on the specified query request, the specified coordinate information and specified map data corresponding to a geographical area range with the specified coordinate information as a center. The cloud server 200 may generate a specified map image based on the specified map data, and then send the specified map image to the electronic device 100. After the electronic device 100 receives the specified map image, the electronic device 100 may display the specified map image.

In this way, the electronic device 100 only needs to have a communication capability and a picture display capability, and does not need to perform a large amount of complex computing and processing on the specified map image. Therefore, power consumption of the electronic device 100 can be reduced, and the electronic device 100 can also provide a map display service for the user more efficiently.

**The following describes, with reference to an application scenario, a map display method according to an embodiment of this application.**

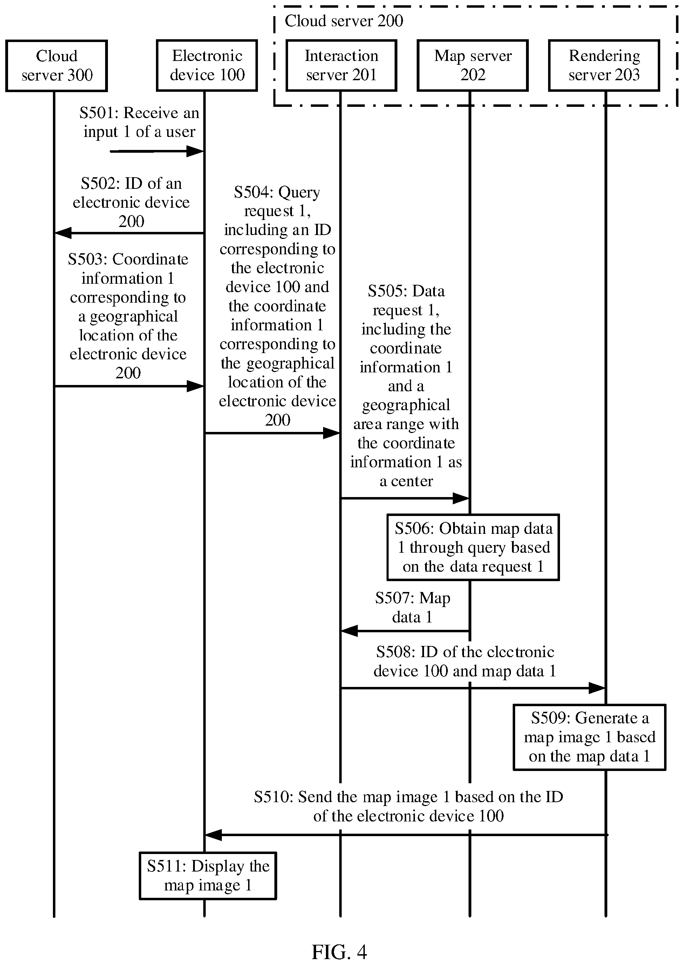

**FIG. 4** **shows a map display method according to an embodiment of this application.**

In some application scenarios, an electronic device 100 (which may also be referred to as a first electronic device) may perform network communication with another device (for example, a cloud server 200). When the electronic device 100 needs to display a map image of a geographical location of an electronic device 200 (which may also be referred to as a second electronic device), the electronic device 100 may send an ID of the electronic device 200 to a cloud server 300, and the cloud server 300 may send a location request to the electronic device 200 based on the ID of the electronic device 200. In response to the location request, the electronic device 200 may send coordinate information 1 of the geographical location of the electronic device 200 to the cloud server 300. The cloud server 300 may send the coordinate information 1 to the electronic device 100. The electronic device 100 may send, to the cloud server 200, a query request 1 that includes the coordinate information 1 and an ID corresponding to the electronic device 100. The cloud server 200 may obtain, based on the query request 1, map data 1 corresponding to a geographical area range with the coordinate information 1 as a center. Then, the cloud server 200 may generate a map image 1 based on the map data 1. The cloud server 200 may send the map image 1 to the electronic device 100. After the electronic device 100 receives the map image 1, the electronic device 100 may display the map image 1. The cloud server 200 may include an interaction server 201, a map server 202, and a rendering server 203. For description of the foregoing servers, refer to the foregoing related description. Details are not described herein again. For a hardware structure of the cloud server 300, refer to the description of the structure of the cloud server 200 in the embodiment shown in FIG. 2B. Details are not described herein again. For a hardware structure of the electronic device 200, refer to the description of the structure of the electronic device 100 in the embodiment shown in FIG. 2A. Details are not described herein again.

In this way, power consumption of the electronic device 100 can be reduced, and the map image of the geographical location of the electronic device 200 can be displayed for a user more efficiently.

As shown in FIG. 4, the method may include the following steps.

S501: The electronic device 100 receives an input 1 (which may also be referred to as a first operation) of the user.

S502: The electronic device 100 sends the ID of the electronic device 200 to the cloud server 300.

Specifically, the electronic device 100 may receive the input 1 of the user for querying the geographical location of the electronic device 200. In response to the input 1, the electronic device 100 may send the ID of the electronic device 200 to the cloud server 300.

In a possible implementation, the ID of the electronic device 200 may be an identifier determined through calculation based on a specified account (for example, a specified account 1) bound to the electronic device 200 and device information of the electronic device 200. In another possible implementation, the ID of the electronic device 200 may alternatively be an international mobile subscriber identification number (international mobile subscriber identification number, IMSI). In another possible implementation, the ID of the electronic device 200 may be a media access control (media access control, MAC) address. This is not limited in this application. It should be noted that, for the ID corresponding to the electronic device 100 and an ID corresponding to an electronic device 300 in subsequent embodiments, refer to the foregoing description of the ID of the electronic device 200. Details are not described subsequently again.

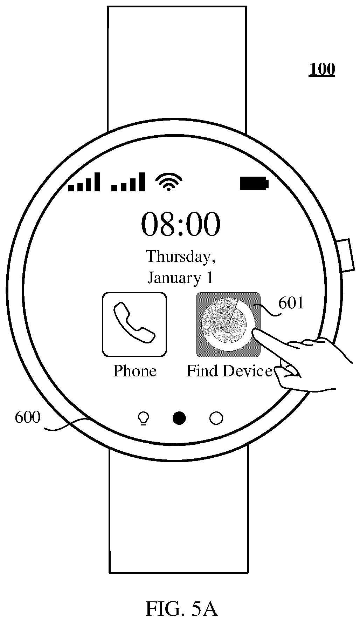

As shown in FIG. 5A, the electronic device 100 may display a home screen 600. The home screen 600 may display one or more application icons. The one or more application icons may include a Phone icon and a Find Device application icon 601. Optionally, the home screen 600 may further display a status bar, a time indicator, and a page indicator. The status bar may include one or more signal strength indicators of a mobile communication signal (which may also be referred to as a cellular signal), a signal strength indicator of a wireless fidelity (wireless fidelity, Wi-Fi) signal, a battery status indicator, and the like. The time indicator may be configured to indicate a current time, such as date, day, hour, and minute information. The page indicator may be configured to indicate a location relationship between a currently displayed page and another page. The page indicator may not be a part of a page but exist alone. This is not limited in embodiments of this application.

The electronic device 100 may receive a touch operation of the user on the Find Device application icon 601. In response to the touch operation, the electronic device 100 may display a login interface.

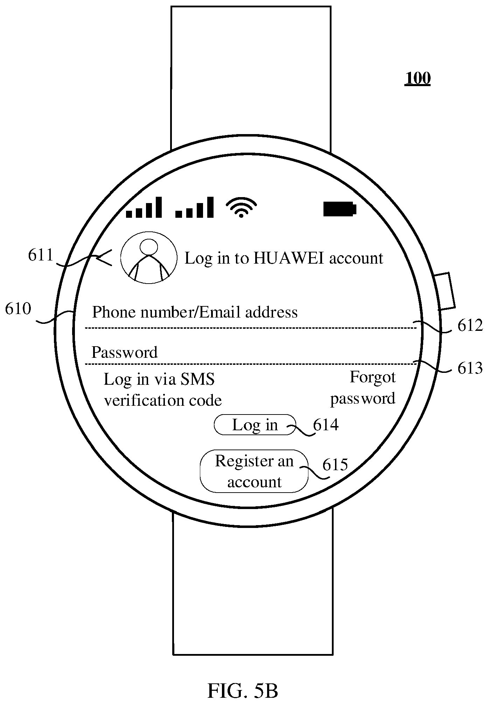

As shown in FIG. 5B, the electronic device 100 may display a login interface 610. The login interface 610 may include a page title "Log in to HUAWEI account", a return control 611, an input box 612, an input box 613, a control 614, and a control 615. The return control 611 may be configured to receive a touch operation (for example, a tap) of the user on the return control 611. In response to the touch operation, the electronic device 100 may return to a previous page. The input box 612 may detect, through monitoring, an input operation of the user on the input box 612. In response to the input operation, the electronic device 100 may receive, in the input box 612, ID information that is of the specified account 1 and that is input by the user. The input box 613 may detect, through monitoring, an input operation of the user on the input box 613. In response to the input operation, the electronic device 100 may receive, in the input box 613, password information input by the user. The control 614 may receive an input operation (for example, a tap) of the user on the control 614. In response to the operation, the electronic device 100 may perform a login operation. For example, the electronic device 100 may send the received ID information and password information of the specified account 1 to the cloud server 300. If the cloud server 300 verifies that the account password matches the ID of the specified account 1, the cloud server 300 may send verification success instruction information to the electronic device 100. After receiving the verification success instruction, the electronic device 100 may obtain, from the cloud server 300, information (for example, a device name of the electronic device 200 and the ID of the electronic device 200) that is of the electronic device 200 and that corresponds to the specified account 1, and display the device name of the electronic device 200 and the like on a user interface. The control 615 may receive an input operation (for example, a tap) of the user on the control 615. In response to the input operation, the electronic device 100 may display a user interface for registering an account, so that the user registers an account based on the user interface.

The electronic device 100 may receive an input that is of the user and that is based on the login interface 610. In response to the input, the electronic device 100 may log in to the specified account 1, and display a device information interface. For a process in which the electronic device 100 logs in to the specified account 1 and displays the device information that is of the electronic device 200 and that corresponds to the specified account 1, refer to the foregoing related description of the control 614. Details are not described herein again.

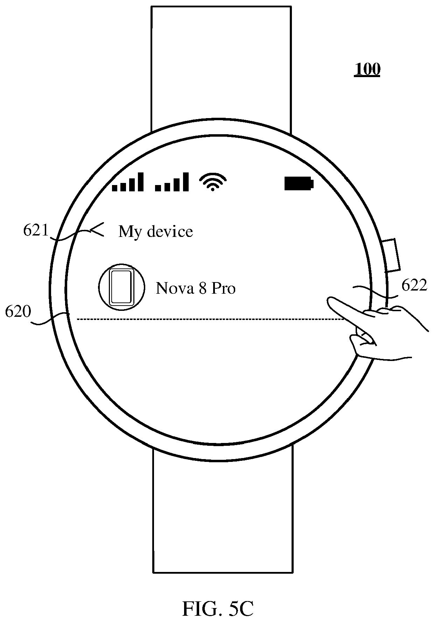

As shown in FIG. 5C, the electronic device 100 may display a device information interface 620. The device information interface 620 may display a page title "My device", a return control 621, and a device option 622. The return control 621 may be configured to receive a touch operation (for example, a tap) of the user on the return control 621. In response to the touch operation, the electronic device 100 may display a previous page (for example, the login interface 610). The device option 622 may include name text information "Nova 8 Pro" of the electronic device 200.

The electronic device 100 may receive a touch operation (which may also be referred to as the input 1, for example, a tap) of the user on the device option 622. In response to the operation, the electronic device 100 may send the ID of the electronic device 200 to the cloud server 300.

In a possible implementation, when the electronic device 100 has logged in to the specified account 1, the electronic device 100 may receive the touch operation of the user on the Find Device application icon 601. In response to the touch operation, the electronic device 100 may display the device information that is of the electronic device 200 and that corresponds to the specified account 1, for example, the device information interface 620 shown in FIG. 5C. This is not limited in this application.

S503: The electronic device 100 receives the coordinate information 1 (which may also be referred to as first geographical information) that is sent by the cloud server 300 and that corresponds to the geographical location of the electronic device 200.

Specifically, the cloud server 300 may periodically (for example, at an interval of 10 minutes) query to obtain the coordinate information 1 corresponding to the geographical location of the electronic device 200, and store the coordinate information 1 in the cloud server 300. Alternatively, the electronic device 200 may periodically (for example, at an interval of 10 minutes) report, to the cloud server 300, the coordinate information 1 corresponding to the geographical location. This is not limited in this application. For example, the cloud server 300 may send the location request to the electronic device 200 based on the received ID that corresponds to the electronic device 200 in the foregoing step. In response to the location request, the electronic device 200 may send, to the cloud server 300, the coordinate information 1 corresponding to a geographical location 1 of the electronic device 200. The electronic device 100 may receive the coordinate information 1 that is returned by the cloud server 300 and that corresponds to the geographical location of the electronic device 200.

In a possible implementation, if the electronic device 200 cannot communicate with the cloud server 300, after the cloud server 300 receives the ID that is of the electronic device 200 and that is sent by the electronic device 100, the cloud server 300 may query latest coordinate information that is stored on the cloud server 300 and that corresponds to the geographical location of the electronic device 200, and send the coordinate information to the electronic device 100.

S504: The electronic device 100 sends the query request 1 (which may also be referred to as a first query request) to the interaction server 201. The query request 1 may include the ID of the electronic device 100 and the coordinate information 1 corresponding to the geographical location of the electronic device 200.

S505: In response to the query request 1, the interaction server 201 may send a data request 1 to the map server 202.

Specifically, the data request 1 may include the coordinate information 1 and the geographical area range with the coordinate information 1 as the center (for example, within a range with the coordinate information 1 as the center and 10 kilometers as a radius).

In a possible implementation, the interaction server 201 may be combined with the cloud server 300. After receiving the input 1 of the user, the electronic device 100 may send the ID of the electronic device 100 and the ID of the electronic device 200 to the interaction server 201. The interaction server 201 may send the location request to the electronic device 200 based on the ID of the electronic device 200. In response to the location request, the electronic device 200 may send, to the interaction server 201, the coordinate information 1 corresponding to the geographical location of the electronic device 200. Then, the interaction server 201 may send the data request 1 to the map server 202. The data request 1 includes the coordinate information 1 and the geographical area range with the coordinate information 1 as the center (for example, within the range with the coordinate information 1 as the center and 10 kilometers as the radius).

In a possible implementation, the electronic device 100 may send the ID of the electronic device 200, the ID of the electronic device 100, and an identifier of the cloud server 300 to the interaction server 201. The interaction server 201 may send the ID of the electronic device 200 to the cloud server 300 based on the identifier of the cloud server 300. The cloud server 300 may send the location request to the electronic device 200 based on the ID of the electronic device 200. In response to the location request, the electronic device 200 may send, to the cloud server 300, the coordinate information 1 corresponding to the geographical location of the electronic device 200. After receiving the coordinate information 1, the cloud server 300 may send the coordinate information 1 to the interaction server 201. Then, the interaction server 201 may send the data request 1 to the map server 202. The data request 1 includes the coordinate information 1 and the geographical area range with the coordinate information 1 as the center (for example, within the range with the coordinate information 1 as the center and 10 kilometers as the radius).

S506: The map server 202 obtains the map data 1 through query based on the data request 1.

Specifically, the map data 1 may include coordinate information in the geographical area range with the coordinate information 1 as the center, a geographical name (for example, a road name or a building name) and road data that correspond to each piece of the coordinate information, and the like.

S507: The map server 202 sends the map data 1 to the interaction server 201.

S508: After receiving the map data 1, the interaction server 201 may send the ID of the electronic device 100 and the map data 1 to the rendering server 203.

Specifically, for description of the map data 1, refer to the description in step S506. Details are not described herein again.

S509: The rendering server 203 generates the map image 1 (which may also be referred to as a first map image) based on the map data 1.

Specifically, the map image 1 may be a map image corresponding to the geographical area range with the coordinate information 1 as the center.

S510: The rendering server 203 may send the generated map image 1 to the electronic device 100 based on the ID of the electronic device 100.

In a possible implementation, the interaction server 201 may send the map data 1 to the rendering server 203, but does not send the ID of the electronic device 100. After the rendering server 203 generates the map image 1 based on the map data 1, the rendering server 203 may send the map image 1 to the interaction server 201. Then, the interaction server 201 sends the map image 1 to the electronic device 100.

S511: The electronic device 100 displays the map image 1.

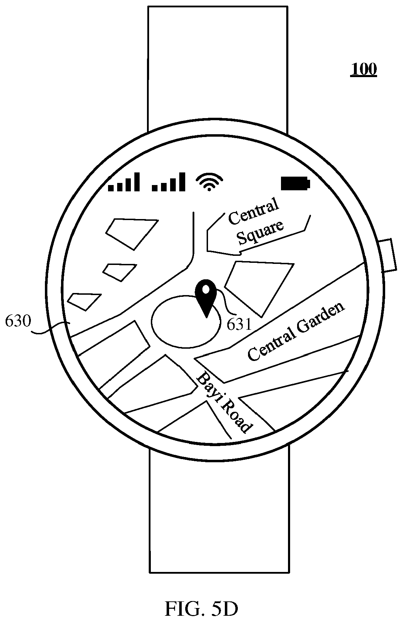

For example, as shown in FIG. 5D, the electronic device 100 may display a map interface 630. The map interface 630 may include one or more geographical names (for example, "Central Garden", "Central Square", and "Bayi Road") and an identifier 631 corresponding to the coordinate information 1. The identifier 631 may indicate the geographical location 1 of the electronic device 200.

In a possible implementation, the electronic device 100 may store the map image 1. For example, the electronic device 100 may store the map image 1 in a local cache of the electronic device 100, or may store the map image 1 in a gallery of the electronic device 100. In this way, when the electronic device 100 needs to re-display, in response to an input of the user, the map image of the coordinate information 1 corresponding to the geographical location of the electronic device 200, the electronic device 100 may directly display the map image 1 without interacting with the cloud server 200 and/or the cloud server 300, to display the map image more efficiently, and improve map image display efficiency.

In a possible implementation, the cloud server 300 and the cloud server 200 may be integrated into one server. In this case, the electronic device 100 may send the query request 1 to the integration server, and the query request 1 may include the ID of the electronic device 100 and the ID of the electronic device 200. After obtaining, through query and based on the ID of the electronic device 200, the coordinate information 1 corresponding to the geographical location of the electronic device 200, the cloud server 300 may send the coordinate information 1 to the interaction server 201 in the cloud server 200. In this way, the coordinate information 1 is sent to the interaction server 201 without being forwarded by the electronic device 100. For subsequent steps, refer to the description in the embodiment shown in FIG. 4. Details are not described herein again. This is not limited in this application.

In a possible implementation, the electronic device 100 may also receive a fifth operation of the user on querying the location of the electronic device 200. In response to the fifth operation, the electronic device 100 may send a second query request to the cloud server 200, and the second query request may include a device identifier of the electronic device 200. The cloud server 200 may obtain, based on the device identifier of the electronic device 200, the first geographical information corresponding to the geographical location of the electronic device 200. Then, the cloud server 200 may obtain corresponding map data based on the first geographical information and a geographical area range with the first geographical information as a center. The cloud server 200 may generate a fifth map image based on the map data, and send the fifth map image to the electronic device 100. After receiving the fifth map image, the electronic device 100 may display the fifth map image. The fifth map image includes the geographical location of the second electronic device.

In a possible implementation, the electronic device 100 may communicate with another device (for example, the cloud server 200). When the electronic device 100 receives an input 2 of the user, and needs to display a map image of a geographical location of the electronic device 100, the electronic device 100 may obtain coordinate information 2 of the geographical location of the electronic device 100 based on a GNSS module in the electronic device 100. The electronic device 100 may send, to the interaction server 201, a query request 2 that includes the ID corresponding to the electronic device 100 and the coordinate information 2. Then, the interaction server 201 may send, to the map server 202, a data request 2 that includes the coordinate information 2 and a geographical area range with the coordinate information 2 as a center (for example, within a range with the coordinate information 2 as the center and 10 kilometers as a radius). The map server 202 may obtain map data 2 through query based on the data request 2, and send the map data 2 to the interaction server 201. The map data 2 is map data (for example, coordinate information in a geographical area range 2 with the coordinate information 2 as the center, and a geographical name and road data that correspond to each piece of the coordinate information) corresponding to the geographical area range with the coordinate information 2 as the center. After receiving the map data 2, the interaction server 201 may send, to the rendering server 203, the map data 2 and the ID corresponding to the electronic device 100. The rendering server 203 generates a map image 2 based on the map data 2. The rendering server 203 may send the generated map image 2 to the electronic device 100 based on the ID corresponding to the electronic device 100. The electronic device 100 displays the map image 2.

Optionally, the interaction server 201 may send the map data 2 to the rendering server 203, but does not send the ID corresponding to the electronic device 100. The rendering server 203 may generate the map image 2 based on the map data 2, and then send the map image 2 to the interaction server 201. After receiving the map image 2, the interaction server 201 may send the map image 2 to the electronic device 100 based on the ID corresponding to the electronic device 100. After receiving the map image 2, the electronic device 100 displays the map image 2.

In a possible implementation, the electronic device 100 and the electronic device 200 may be bound to and log in to a same account (for example, the specified account 1). In other words, the electronic device 100 may be bound to and log in to the specified login account 1 (which may also be referred to as a first account), and the electronic device 200 may also be bound to and log in to the specified login account 1. In this case, the specified account 1 may include both device information of the electronic device 100 and the device information of the electronic device 200.

In another possible implementation, alternatively, the electronic device 100 and the electronic device 200 may correspondingly be bound to and log in to different accounts, and an account bound to the electronic device 100 is associated with an account bound to the electronic device 200. For example, the electronic device 100 may be bound to and log in to the specified account 1 (which may also be referred to as a first account), the electronic device 200 may be bound to and log in to a specified login account 2 (which may also be referred to as a second account), and the specified account 1 is associated with the specified account 2. In other words, the specified account 1 includes device information of the electronic device 100, and the specified account 2 includes the device information of the electronic device 200. The specified account 1 is associated with the specified account 2. In this case, the electronic device 100 may alternatively send the ID of the electronic device 200 to the cloud server 300 based on an association relationship between the specified account 1 and the specified account, to obtain the coordinate information 1 of the geographical location of the electronic device 200 in the specified account 2. This is not limited in this application.

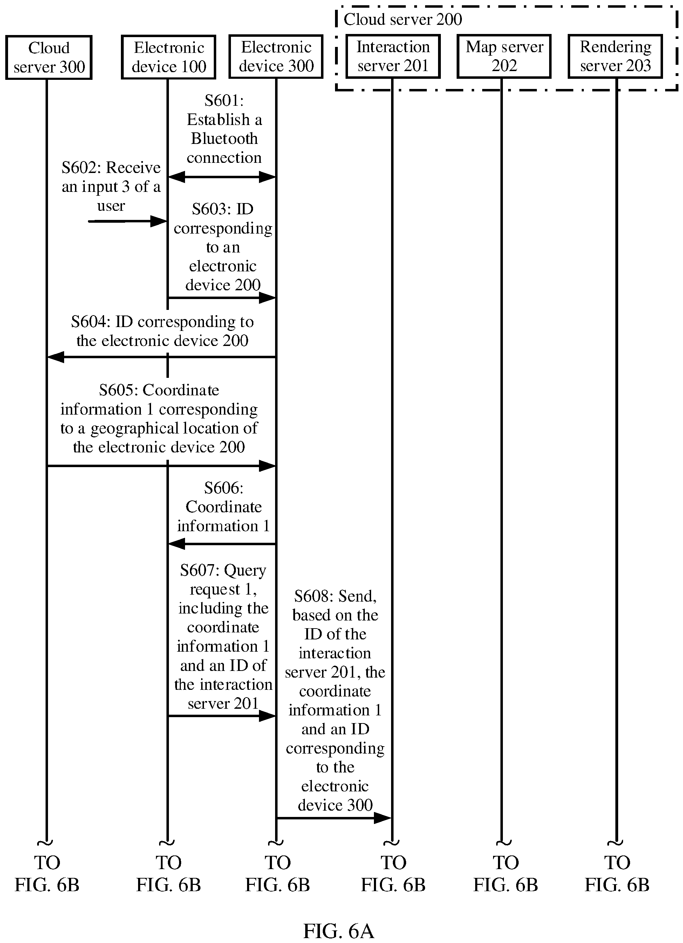

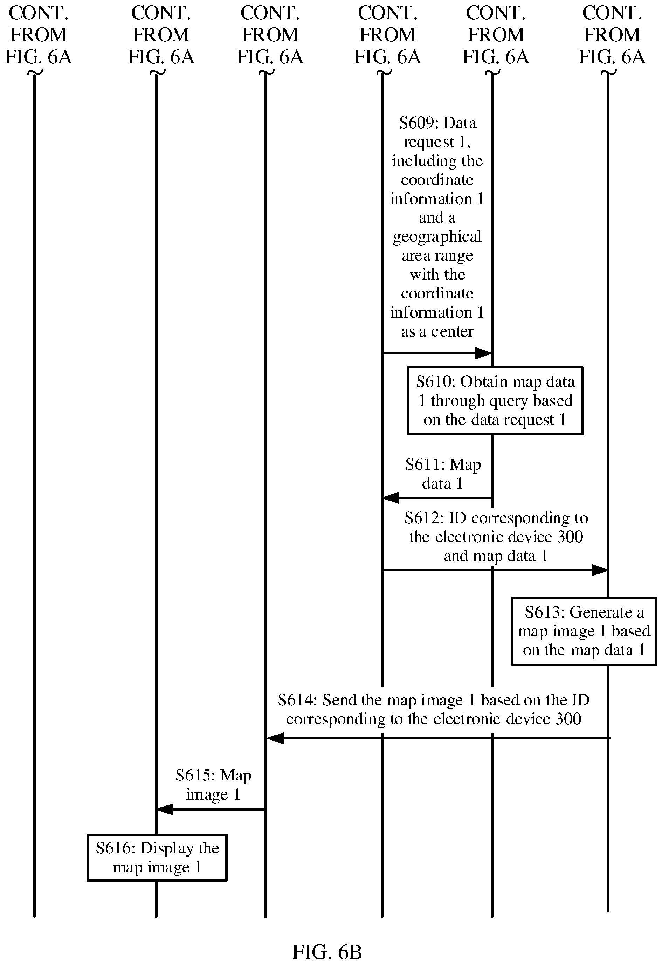

**FIG. 6A** **and** **FIG. 6B** **show another map display method according to an embodiment of this application.**

In some application scenarios, an electronic device 100 does not have a network communication capability, and cannot communicate with another device (for example, a cloud server 200). When the electronic device 100 needs to display a map image of a geographical location of the electronic device 200, the electronic device 100 may establish a Bluetooth connection to an electronic device 300. The electronic device 100 may send, to the electronic device 300 through the Bluetooth connection, an ID corresponding to the electronic device 200. The electronic device 300 may send the ID to a cloud server 300. The cloud server 300 may send a location request to the electronic device 200 based on the ID of the electronic device 200. In response to the location request, the electronic device 200 may send coordinate information 1 of the geographical location of the electronic device 200 to the cloud server 300. The cloud server 300 may send the coordinate information 1 to the electronic device 100 through the electronic device 300. The electronic device 100 may send, to the cloud server 200 through the electronic device 300, a query request 1 that includes the coordinate information 1. The cloud server 200 may obtain, based on the query request 1, map data 1 corresponding to a geographical area range with the coordinate information 1 as a center. Then, the cloud server 200 may generate a map image 1 based on the map data 1. The cloud server 200 may send the map image 1 to the electronic device 100 through the electronic device 300. After the electronic device 100 receives the map image 1, the electronic device 100 may display the map image 1 on a display. For a hardware structure of the electronic device 300, refer to the description of the structure of the electronic device 100 in the embodiment shown in FIG. 2A. Details are not described herein again.

In this way, power consumption and processing steps of the electronic device 100 can be reduced, and the map image of the geographical location of the electronic device 200 can be displayed for a user more efficiently and more conveniently.

As shown in FIG. 6A and FIG. 6B, the method may include the following steps.

S601: The electronic device 100 establishes the Bluetooth connection to the electronic device 300.

S602: The electronic device 100 receives an input 3 of the user.

S603: The electronic device 100 sends, to the electronic device 300, the ID corresponding to the electronic device 200.

Specifically, the electronic device 100 may receive the input 3 of the user for querying the geographical location of the electronic device 200. In response to the input 3, the electronic device 100 may send, to the electronic device 300 through the Bluetooth connection, the ID corresponding to the electronic device 200.

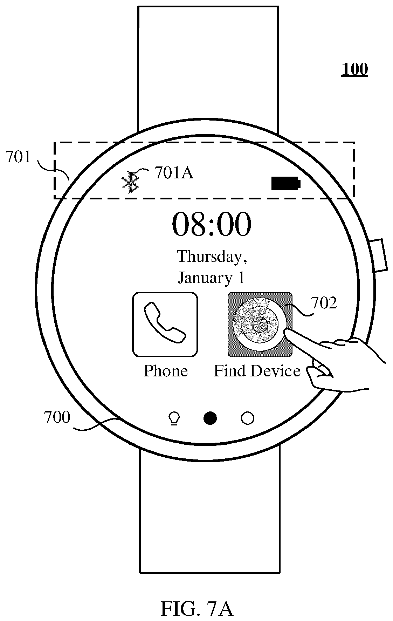

As shown in FIG. 7A, the electronic device 100 may display a home screen 700. The home screen 700 may display one or more application icons and a status bar 701. The one or more application icons may include a Phone icon and a Find Device application icon 702. The status bar 701 includes a Bluetooth icon 701A. The Bluetooth icon 701A may be used to indicate that the Bluetooth connection is established between the electronic device 100 and the electronic device 300. Optionally, the home screen 700 may further include a time indicator and a page indicator. The page indicator may be configured to indicate a location relationship between a currently displayed page and another page. The page indicator may not be a part of a page but exist alone. This is not limited in embodiments of this application.

The electronic device 100 may receive a touch operation of the user on the Find Device application icon 702. When the electronic device 100 has logged in to a specified account 1, in response to the touch operation, the electronic device 100 may display device information that is of the electronic device 200 and that corresponds to the specified account 1.

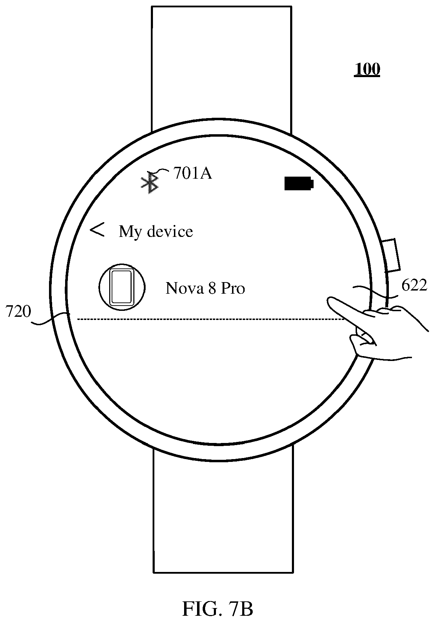

As shown in FIG. 7B, the electronic device 100 may display a device information interface 720. The device information interface 720 may include the Bluetooth icon 701A, and the Bluetooth icon 701A may be used to indicate that the Bluetooth connection is established between the electronic device 100 and the electronic device 300. For other interface elements of the device information interface 720, refer to the description of the device information interface 620 shown in FIG. 5C. Details are not described herein again.

The electronic device 100 may receive a touch operation (which may also be referred to as the input 3, for example, a tap) of the user on a device option 622. In response to the operation, the electronic device 100 may display device information of the electronic device 300 that establishes the Bluetooth connection to the electronic device 100.

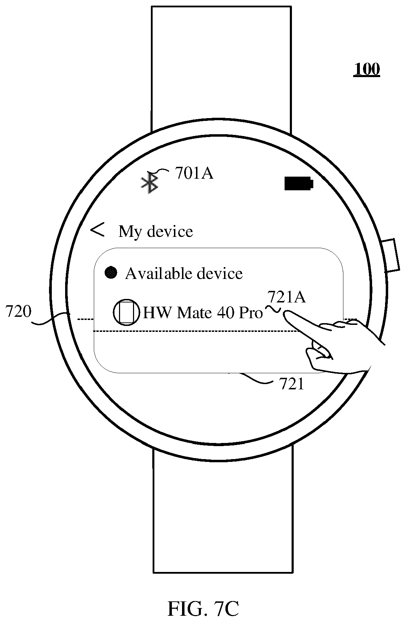

As shown in FIG. 7C, the electronic device 100 may display a window 721 on the device information interface 720. The window 721 may include a device option 721A of the electronic device 300 that establishes the Bluetooth connection to the electronic device 100. The device option 721A may include the device information of the electronic device 300, for example, a device name "HW Mate 40 Pro" of the electronic device 300. The electronic device 100 may receive a touch operation (for example, a tap) of the user on the device option 721A. In response to the touch operation, the electronic device 100 may send the ID of the electronic device 200 to the electronic device 300.

In a possible implementation, when the electronic device 100 does not log in to the specified account 1, and the electronic device 100 may receive the touch operation of the user on the Find Device application icon 702, the electronic device 100 may display a login interface. The electronic device 100 may receive an input that is of the user and that is based on the login interface. In response to the input, the electronic device 100 may receive account ID information and account password information that are input by the user, and send the account ID information and the account password information to the electronic device 300 through the Bluetooth connection. Then, the electronic device 300 may send the account ID information and the account password information to the cloud server 300. If the cloud server 300 verifies that the account password matches the account ID, the cloud server 300 may send verification success instruction information to the electronic device 300. After receiving the verification success instruction, the electronic device 300 may obtain, from the cloud server 300, information (for example, a device name of the electronic device 200 and the ID of the electronic device 200) that is of the electronic device 200 and that corresponds to the account, and send the information to the electronic device 100 through the Bluetooth connection. The electronic device 100 may display the device name and the like of the electronic device 200 on a user interface.

S604: The electronic device 300 sends the ID of the electronic device 200 to the cloud server 300.

S605: The electronic device 300 receives the coordinate information 1 that is sent by the cloud server 300 and that corresponds to the geographical location of the electronic device 200.

Specifically, the cloud server 300 may periodically (for example, at an interval of 10 minutes) query to obtain the coordinate information 1 corresponding to the geographical location of the electronic device 200, and store the coordinate information 1 in the cloud server 300. Alternatively, the electronic device 200 may periodically (for example, at an interval of 10 minutes) report, to the cloud server 300, the coordinate information 1 corresponding to the geographical location. This is not limited in this application. For example, the cloud server 300 may send the location request to the electronic device 200 based on the received ID that corresponds to the electronic device 200 in the foregoing step. In response to the location request, the electronic device 200 may send, to the cloud server 300, the coordinate information 1 corresponding to a geographical location 1 of the electronic device 200. The electronic device 300 may receive the coordinate information 1 that is returned by the cloud server 300 and that corresponds to the geographical location 1 of the electronic device 200.

In a possible implementation, if the electronic device 200 cannot communicate with the cloud server 300, after the cloud server 300 receives the ID that corresponds the electronic device 200 and that is sent by the electronic device 100, the cloud server 300 may query latest coordinate information that is stored on the cloud server 300 and that corresponds to the geographical location of the electronic device 200, and send the coordinate information to the electronic device 300.

S606: The electronic device 300 sends the coordinate information 1 to the electronic device 100.

S607: The electronic device 100 sends the query request 1 to the electronic device 300. The query request 1 may include the coordinate information 1 corresponding to the geographical location of the electronic device 200 and an ID of an interaction server 201.

S608: In response to the query request 1, the electronic device 300 sends, to the interaction server 201 based on the ID of the interaction server 201, the coordinate information 1 and an ID corresponding to the electronic device 300.

S609: After receiving the coordinate information 1 and the ID corresponding to the electronic device 300, the interaction server 201 may send a data request 1 to a map server 202.

For description of this step, refer to the description in step S505. Details are not described herein again.

S610: The map server 202 obtains the map data 1 through query based on the data request 1.

For description of the map data 1, refer to the description in step S506. Details are not described herein again.

S611: The map server 202 sends the map data 1 to the interaction server 201.

S612: After receiving the map data 1, the interaction server 201 may send, to a rendering server 203, the ID corresponding to the electronic device 300 and the map data 1.

S613: The rendering server 203 generates the map image 1 based on the map data 1.

Specifically, the map image 1 may be a map image corresponding to the geographical area range with the coordinate information 1 as the center.

S614: The rendering server 203 may send the generated map image 1 to the electronic device 300 based on the ID corresponding to the electronic device 300.

In a possible implementation, the interaction server 201 may send the map data 1 to the rendering server 203, but does not send the ID corresponding to the electronic device 300. After the rendering server 203 generates the map image 1 based on the map data 1, the rendering server 203 may send the map image 1 to the interaction server 201. Then, the interaction server 201 sends the map image 1 to the electronic device 300.

S615: The electronic device 300 sends the map image 1 to the electronic device 100.

S616: The electronic device 100 displays the map image 1.

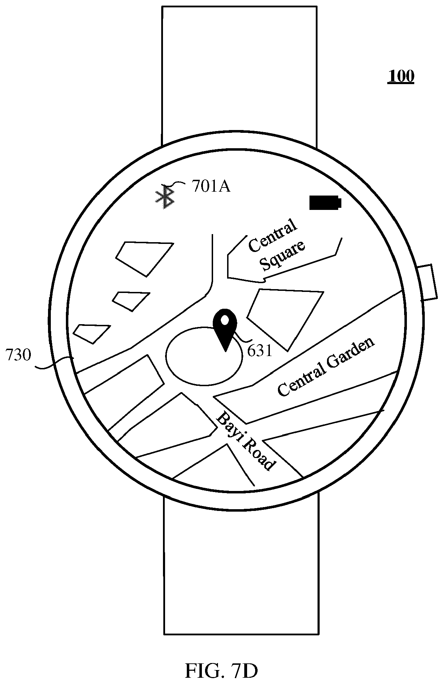

For example, as shown in FIG. 7D, the electronic device 100 may display a map interface 730. The map interface 730 may include the Bluetooth icon 701A, and the Bluetooth icon 701A may be used to indicate that the Bluetooth connection is established between the electronic device 100 and the electronic device 300. For other interface elements of the map interface 730, refer to the description of the map interface 630 shown in FIG. 5D. Details are not described herein again.

In a possible implementation, the electronic device 100 does not have a network communication capability, and cannot communicate with another device (for example, the cloud server 200). When the electronic device 100 receives an input 4 of the user, and needs to display a map image of a geographical location of the electronic device 100, the electronic device 100 may obtain coordinate information 2 of the geographical location of the electronic device 100 based on a GNSS module in the electronic device 100. The electronic device 100 may send, to the electronic device 300, a query request 2 that includes the coordinate information 2. Then, the electronic device 300 may send, to the interaction server 201, the ID corresponding to the electronic device 300 and the coordinate information 2. After receiving the foregoing data, the interaction server 201 may send, to the map server 202, data request 2 that includes the coordinate information 2 and a geographical area range with the coordinate information 2 as a center (for example, within a range with the coordinate information 2 as the center and 10 kilometers as a radius). The map server 202 may obtain map data 2 through query based on the data request 2, and send the map data 2 to the interaction server 201. The map data 2 is map data (for example, coordinate information in the geographical area range with the coordinate information 2 as the center, and a geographical name and road data that correspond to each piece of the coordinate information) corresponding to the geographical area range with the coordinate information 2 as the center. After receiving the map data 2, the interaction server 201 may send, to the rendering server 203, the map data 2 and the ID corresponding to the electronic device 300. The rendering server 203 generates a map image 2 based on the map data 2. The rendering server 203 may send the generated map image 2 to the electronic device 300 based on the ID corresponding to the electronic device 300. The electronic device 300 sends the map image 2 to the electronic device 100. After receiving the map image 2, the electronic device 100 displays the map image 2.

Optionally, the interaction server 201 may send the map data 2 to the rendering server 203, but does not send the ID corresponding to the electronic device 300. The rendering server 203 may generate the map image 2 based on the map data 2, and then send the map image 2 to the interaction server 201. After receiving the map image 2, the interaction server 201 may send the map image 2 to the electronic device 300 based on the ID corresponding to the electronic device 300. The electronic device 300 sends the map image 2 to the electronic device 100. After receiving the map image 2, the electronic device 100 displays the map image 2.

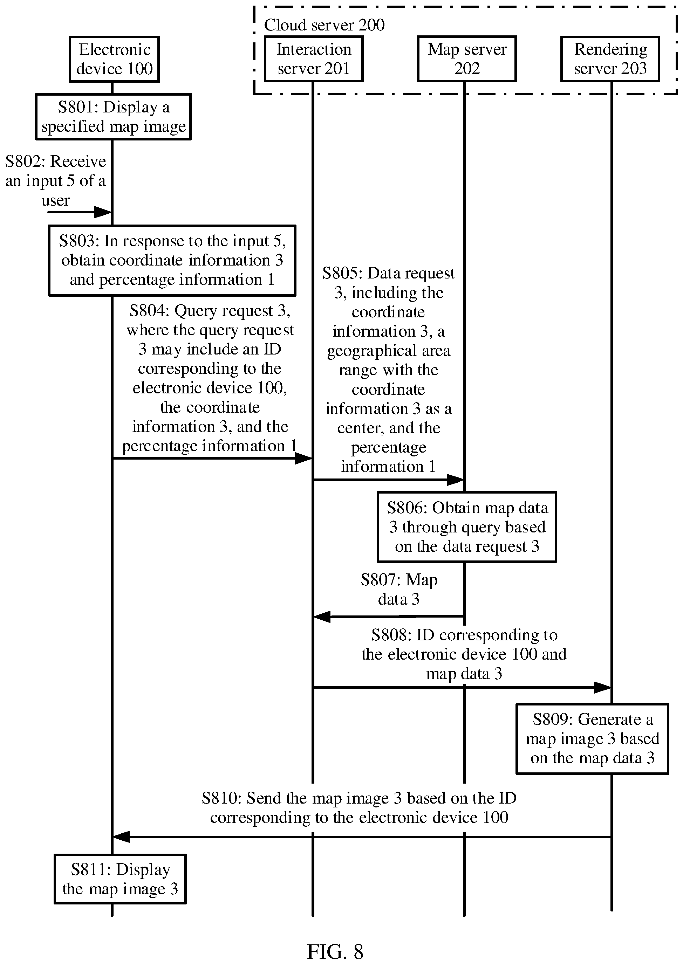

**FIG. 8** **shows another map display method according to an embodiment of this application.**

In some application scenarios, an electronic device 100 may display a specified map image (for example, a map image 1). When the electronic device 100 receives an input 5 (which may also be referred to as a third operation, for example, an input of scaling up the specified map image or an input of scaling down the specified map image) of a user on the specified map image, the electronic device 100 may obtain coordinate information 3 (which may also be referred to as third geographical information) and percentage information 1 (which may also be referred to as first percentage information). The electronic device 100 may send a query request 3 (which may also be referred to as a second instruction) to an interaction server 201, and the query request 1 may include the coordinate information 3, the percentage information 1, and an ID corresponding to the electronic device 100. Then, the interaction server 201 may send a data request 3 to a map server 202, and the data request 3 includes the coordinate information 3 and the percentage information 1. In response to the data request 3, the map server 202 may obtain map data 3 through query, and send the map data 3 to the interaction server 201. The interaction server 201 may send, to a rendering server 203, the map data 3 and the identifier corresponding to the electronic device 100. The rendering server 203 may generate a map image 3 (which may also be referred to as a third map image) based on the map data 3, and send the map image 3 to the electronic device 100 based on the identifier corresponding to the electronic device 100. After receiving the map image 3, the electronic device 100 may display the map image 3.

As shown in FIG. 8, the method may include the following steps.

S801: The electronic device 100 displays the specified map image.

For example, the specified map image is the map image 1. The map image 1 may be a map image corresponding to a geographical area range, in the embodiment shown in FIG. 4, with coordinate information 1 as a center, where the coordinate information 1 is a geographical location of an electronic device 200. For an interface of the map image 1, refer to the description of the embodiment shown in FIG. 5D. Details are not described herein again.

S802: The electronic device 100 receives the input 5 of the user.

Specifically, the input 5 may be the input of the user for scaling up the specified map image by a specified percentage, or may be the input of the user for scaling down the specified map image by a specified percentage. This is not limited in this application.

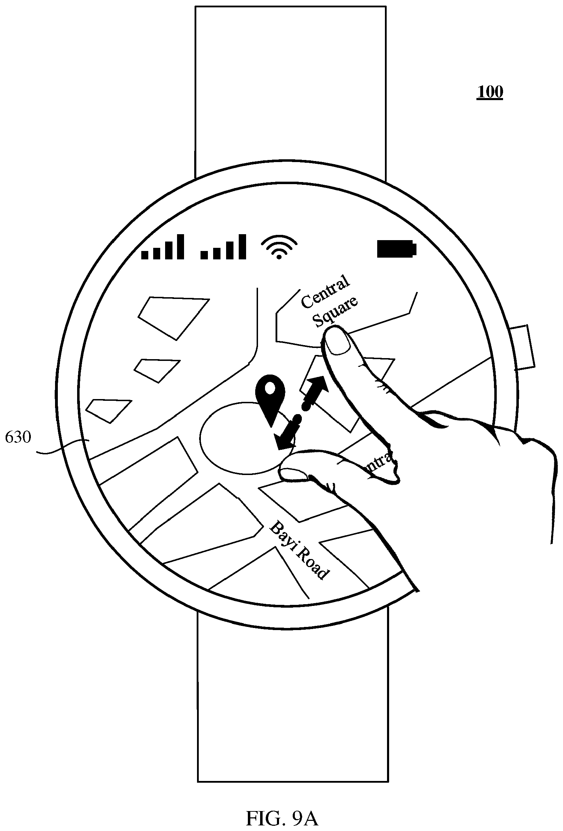

For example, as shown in FIG. 9A, the specified map image is the map image 1, and the map image 1 is scaled up by the specified percentage. The electronic device 100 may display a map interface 630 shown in FIG. 5D. The electronic device 100 may receive a scaling-up input of the user on the map image 1 on the map interface 630 (which may also be referred to as the input 5, for example, a scaling-up input in a manner of pinching two fingers).

S803: In response to the input 5, the electronic device 100 obtains the coordinate information 3 and the percentage information 1.

Specifically, the coordinate information 3 may be center coordinates based on which the specified map image is transformed (for example, the specified map image is scaled up with the coordinate information 3 as a center, or the specified map image is scaled down with the coordinate information 3 as a center). The electronic device 100 may perform image transformation on the specified map image based on the percentage information 1.

For example, the coordinate information 3 may be coordinate information corresponding to the geographical location of the electronic device 200 in the example in the embodiment shown in FIG. 4. In other words, the coordinate information 3 is the same as the coordinate information 1.

In a possible implementation, the coordinate information 3 may alternatively be coordinate information specified by the user, and the coordinate information specified by the user may be different from the coordinate information 1 corresponding to the geographical location of the electronic device 200. This is not limited in this application.

S804: The electronic device 100 sends the query request 3 to the interaction server 201. The query request 3 may include the ID corresponding to the electronic device 100, the coordinate information 3, and the percentage information 1.

S805: In response to the query request 3, the interaction server 201 may send the data request 3 to the map server 202. The data request 3 may include the coordinate information 3, a geographical area range with the coordinate information 3 as a center (for example, within a range with the coordinate information 3 as the center and 10 kilometers as a radius), and the percentage information 1.

S806: The map server 202 obtains the map data 3 through query based on the data request 3.

Specifically, the map data 3 may include coordinate information in the geographical area range with the coordinate information 3 as the center, a geographical name (for example, a road name or a building name) and road data that correspond to each piece of the coordinate information, and the like.

S807: The map server 202 sends the map data 3 to the interaction server 201.

S808: After receiving the map data 3, the interaction server 201 may send, to the rendering server 203, the ID corresponding to the electronic device 100 and the map data 3.

Specifically, for description of the map data 3, refer to the description in step S806. Details are not described herein again.

S809: The rendering server 203 generates the map image 3 based on the map data 3.

S810: The rendering server 203 may send the generated map image 3 to the electronic device 100 based on the ID corresponding to the electronic device 100.

In a possible implementation, the interaction server 201 may send the map data 3 to the rendering server 203, but does not send the ID corresponding to the electronic device 100. After the rendering server 203 generates the map image 3 based on the map data 3, the rendering server 203 may send the map image 3 to the interaction server 201. Then, the interaction server 201 sends the map image 3 to the electronic device 100.

S811: The electronic device 100 displays the map image 3.

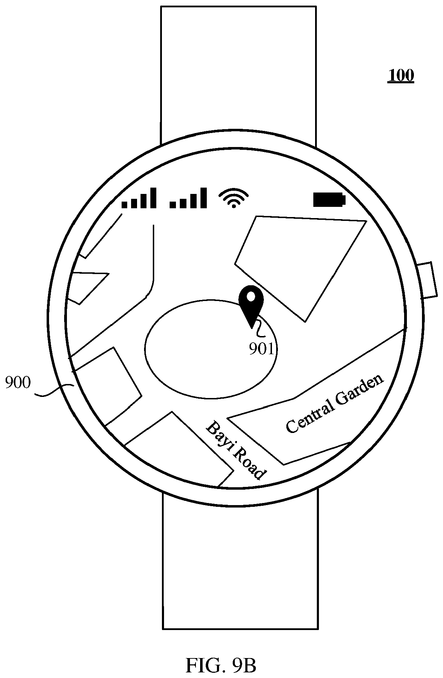

For example, as shown in FIG. 9B, the electronic device 100 may display a map interface 900. The map interface 900 may include one or more geographical names (for example, "Central Garden", "Central Square", and "Bayi Road") and an identifier 901 corresponding to the coordinate information 3. The identifier 901 may indicate a geographical location 1 of the electronic device 200. The map image 3 is a scaled-up image of the map image 1 based on the percentage information 1.

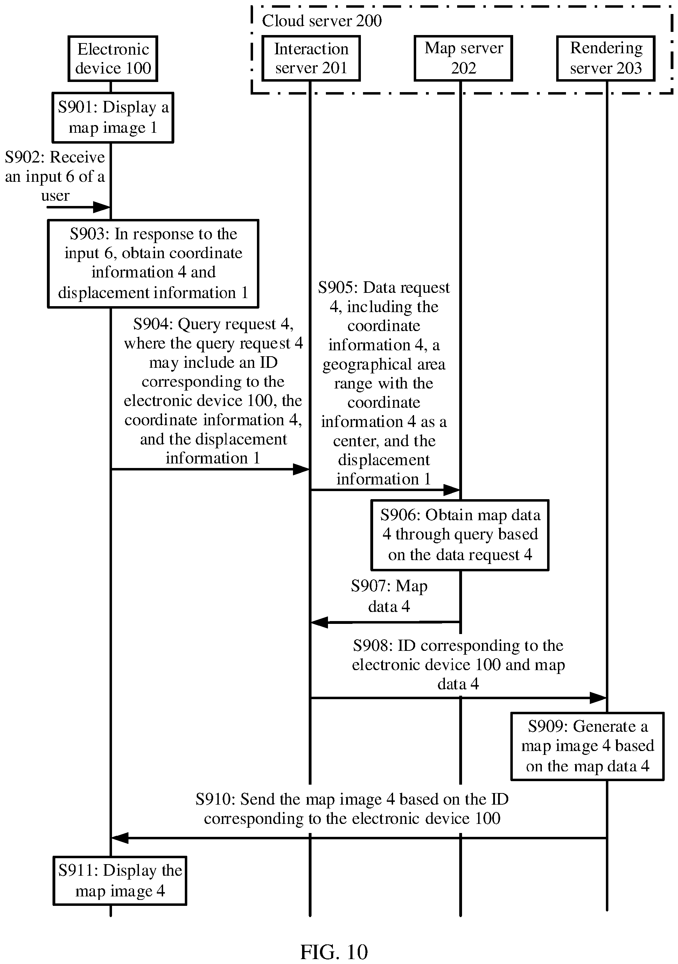

**FIG. 10** **shows another map display method according to an embodiment of this application.**

In some application scenarios, an electronic device 100 may display a specified map image (for example, a map image 1). When the electronic device 100 receives an input 6 (which may also be referred to as a fourth operation, for example, a drag operation) of a user for moving the specified map image (for example, the map image 1), and displays an image outside a currently displayed map area, the electronic device 100 may obtain coordinate information 4 and displacement information 1. The electronic device 100 may send a query request 4 (which may also be referred to as a third instruction) to an interaction server 201. The query request 4 may include the coordinate information 4 (which may also be referred to as fourth geographical information), the displacement information 1 (which may also be referred to as first displacement information), and an ID corresponding to the electronic device 100. Then, the interaction server 201 may send a data request 4 to a map server 202, and the data request 4 includes the coordinate information 4, a geographical area range with the coordinate information 4 as a center, and the displacement information 1. In response to the data request 4, the map server 202 may obtain the map data 4 through query, and send the map data 4 to the interaction server 201. The interaction server 201 may send, to a rendering server 203, the map data 4 and the identifier corresponding to the electronic device 100. The rendering server 203 may generate a map image 4 (which may also be referred to as a fourth map image) based on the map data 4, and send the map image 4 to the electronic device 100 based on the identifier corresponding to the electronic device 100. After receiving the map image 4, the electronic device 100 may display the map image 4. The map image 4 includes a geographical area outside a display area of the map image 1.

As shown in FIG. 10, the method may include the following steps.

S901: The electronic device 100 displays the specified map image.

For example, the specified map image is the map image 1. The map image 1 may be a map image corresponding to a geographical area range, in the embodiment shown in FIG. 4, with coordinate information 1 as a center, where the coordinate information 1 is a geographical location of an electronic device 200. For an interface of the map image 1, refer to the description of the embodiment shown in FIG. 5D. Details are not described herein again.

S902: The electronic device 100 receives the input 6 of the user.

Specifically, the input 6 may be the input of moving the specified map image (for example, the map image 1) by the user to display the image outside the currently displayed map area, for example, a leftward drag operation on the specified map image, a rightward drag operation on the specified map image, an upward drag operation on the specified map image, or an upward drag operation on the specified map image. This is not limited in this application.

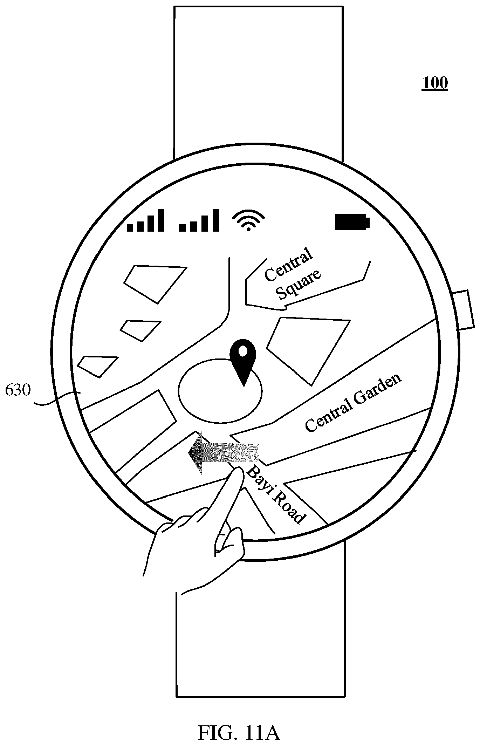

For example, the specified map image is the map image 1. As shown in FIG. 11A, the electronic device 100 may receive a leftward drag operation (which may also be referred to as the input 6) of the user on the map image 1.

S903: In response to the input 6, the electronic device 100 obtains the coordinate information 4 and the displacement information 1.

Specifically, the electronic device 100 may determine the coordinate information 4 based on the coordinate information 1 and the displacement information 1, and the coordinate information 4 is center coordinates of the map image 4.

S904: The electronic device 100 sends the query request 4 to the interaction server 201. The query request 4 may include the ID corresponding to the electronic device 100, the coordinate information 4, and the displacement information 1.

In a possible implementation, the query request 4 may alternatively include the ID corresponding to the electronic device 100, the displacement information 1, and the coordinate information 1. After receiving the query request 4, the interaction server 201 may determine the coordinate information 4 based on the coordinate information 1 and the displacement information 1, and the coordinate information 4 is the center coordinates of the map image 4.

S905: In response to the query request 4, the interaction server 201 may send the data request 4 to the map server 202. The data request 4 may include the coordinate information 4, the geographical area range with the coordinate information 4 as the center (for example, within a range with the coordinate information 4 as the center and 10 kilometers as a radius), and the displacement information 1.

S906: The map server 202 obtains the map data 4 through query based on the data request 4.

Specifically, the map data 4 may include coordinate information in the geographical area range with the coordinate information 4 as the center, a geographical name (for example, a road name or a building name) and road data that correspond to each piece of the coordinate information, and the like.

S907: The map server 202 sends the map data 4 to the interaction server 201.

S908: After receiving the map data 4, the interaction server 201 may send, to the rendering server 203, the ID corresponding to the electronic device 100 and the map data 4.

S909: The rendering server 203 may generate the map image 4 based on the map data 4.

S910: The rendering server 203 may send the generated map image 4 to the electronic device 100 based on the ID corresponding to the electronic device 100.

In a possible implementation, the interaction server 201 may send the map data 4 to the rendering server 203, but does not send the ID corresponding to the electronic device 100. After the rendering server 203 generates the map image 4 based on the map data 4, the rendering server 203 may send the map image 4 to the interaction server 201. Then, the interaction server 201 sends the map image 4 to the electronic device 100.

S911: The electronic device 100 displays the map image 4.

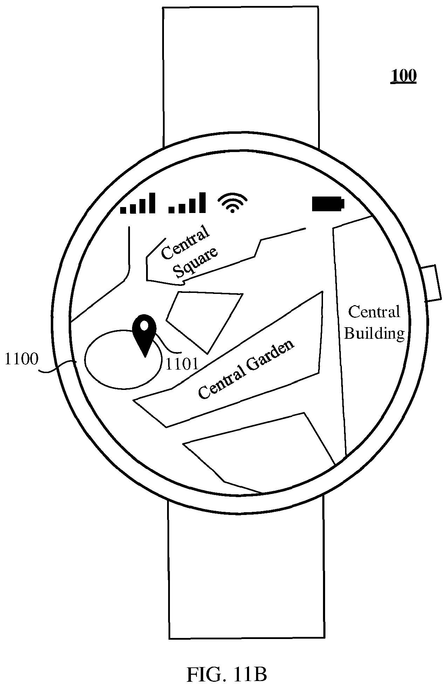

For example, as shown in FIG. 11B, the electronic device 100 may display a map interface 1100. The map interface 1100 may include one or more geographical names (for example, "Central Garden", "Central Square", and "Central Building") and an identifier 1101 corresponding to the coordinate information 1. The identifier 1101 may indicate a geographical location 1 of the electronic device 200. The map image 4 is a map image obtained by moving the map image 1 leftward by a specified percentage.

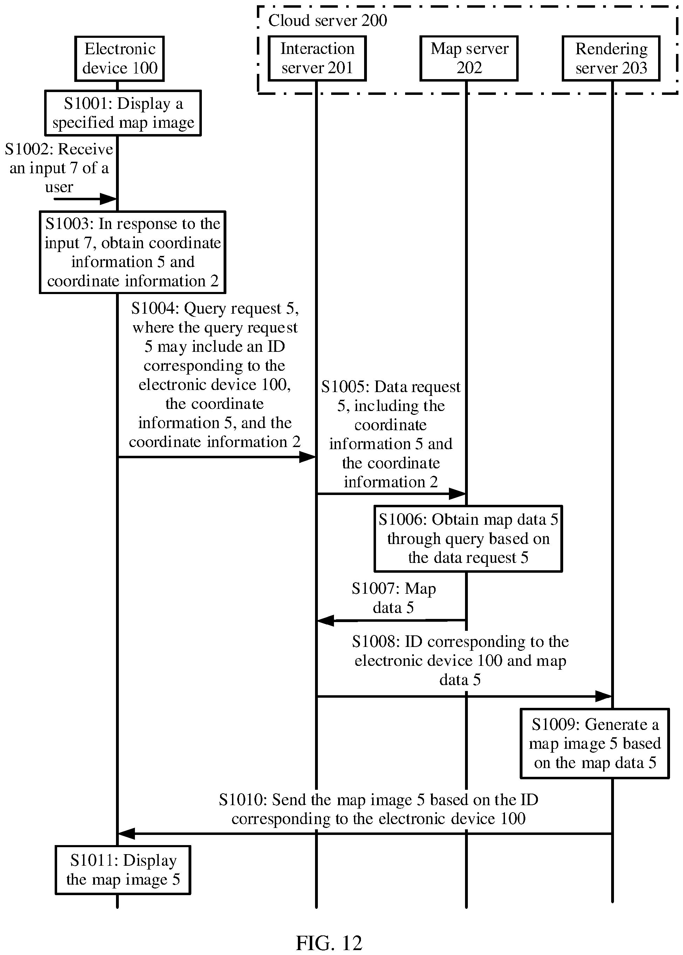

**FIG. 12** **shows another map display method according to an embodiment of this application.**

In some application scenarios, an electronic device 100 may display a specified map image (for example, a map image 1). When the electronic device 100 receives an input 7 (which may also be referred to as a second operation, for example, a tap on a "Navigation" control) of a user for performing navigation based on the specified map image, the electronic device 100 may obtain coordinate information 5 (which may also be referred to as first geographical information) corresponding to a destination and coordinate information 2 (which may also be referred to as second geographical information) corresponding to a geographical location of the electronic device 100. The electronic device 100 may send a query request 5 (which may also be referred to as a first instruction) to an interaction server 201, and the query request 5 may include the coordinate information 5, the coordinate information 2, and an ID corresponding to the electronic device 100. Then, the interaction server 201 may send a data request 5 to a map server 202, and the data request 5 may include the coordinate information 5 and the coordinate information 2. In response to the data request 5, the map server 202 may obtain map data 5 through query, and the map data 5 includes data of a route from the coordinate information 2 to the coordinate information 5. The map server 202 sends the map data 5 to the interaction server 201. The interaction server 201 may send, to a rendering server 203, the map data 5 and the ID corresponding to the electronic device 100. The rendering server 203 may generate a map image 5 (which may also be referred to as a second map image) based on the map data 5, and may send the map image 5 to the electronic device 100 based on the identifier corresponding to the electronic device 100. After receiving the map image 5, the electronic device 100 may display the map image 5. The map image 5 includes an identifier of the route from the coordinate information 2 corresponding to the geographical location of the electronic device 100 to the coordinate information 5 corresponding to the destination.

As shown in FIG. 12, the method may include the following steps.

S1001: The electronic device 100 displays the specified map image.

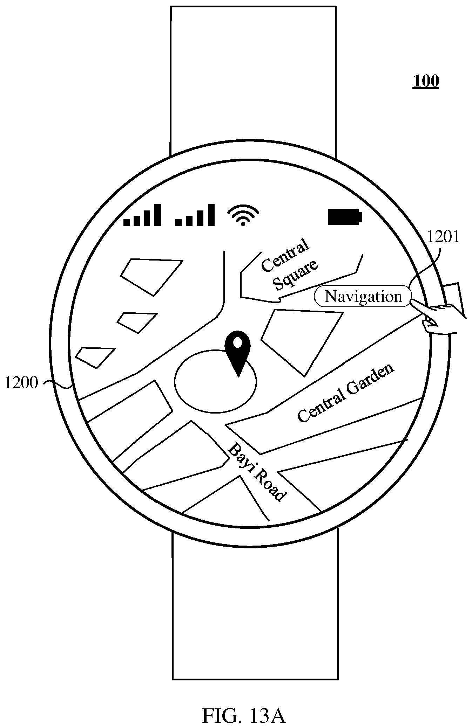

For example, the specified map image is the map image 1. The map image 1 may be a map image corresponding to a geographical area range 1, in the foregoing embodiment, with coordinate information 1 as a center, where the coordinate information 1 is a geographical location of an electronic device 200. As shown in FIG. 13A, the electronic device 100 may display a user interface 1200. The user interface 1200 includes the map image 1 and the "Navigation" control 1201. For an interface element of the map image 1, refer to the description of the embodiment shown in FIG. 5D. Details are not described herein again.

S1002: The electronic device 100 receives the input 7 of the user.

Specifically, the input 7 may be the input (for example, a touch operation) of the user for performing navigation based on the specified map image.

For example, the specified map image is the map image 1. As shown in FIG. 13A, the electronic device 100 may receive a touch operation (which may also be referred to as the input 7, for example, a tap) of the user on the "Navigation" control 1201.

S1003: In response to the input 7, the electronic device 100 obtains the coordinate information 5 corresponding to the destination and the coordinate information 2 corresponding to the geographical location of the electronic device 100.

For example, in this embodiment of this application, the coordinate information 5 corresponding to the destination may be the coordinate information 1 corresponding to the geographical location of the electronic device 200.

In some embodiments, the coordinate information 5 corresponding to the destination may alternatively be coordinate information of a geographical location specified by the user. This is not limited in this application.

S1004: The electronic device 100 sends the query request 5 to the interaction server 201. The query request 5 may include the ID corresponding to the electronic device 100, the coordinate information 5, and the coordinate information 2.

S1005: In response to the query request 5, the interaction server 201 may send the data request 5 to the map server 202. The data request 5 may include the coordinate information 5 and the coordinate information 2. In some other embodiments, the data request 5 may further include a geographical area range with the coordinate information 5 as a center (for example, within a range with the coordinate information 5 as the center and 10 kilometers as a radius), to determine a display range of the map data.

S1006: The map server 202 obtains the map data 5 through query based on the data request 5. The map data 5 includes the data of the route from the coordinate information 2 to the coordinate information 5.

S1007: The map server 202 sends the map data 5 to the interaction server 201.

S1008: After receiving the map data 5, the interaction server 201 may send, to the rendering server 203, the ID corresponding to the electronic device 100 and the map data 5.

S1009: The rendering server 203 may generate the map image 5 based on the map data 5.

S1010: The rendering server 203 may send the generated map image 5 to the electronic device 100 based on the ID corresponding to the electronic device 100.

The map image 5 includes the identifier of the route from the coordinate information 2 corresponding to the geographical location of the electronic device 100 to the coordinate information 5 corresponding to the destination.

In a possible implementation, the interaction server 201 may send the map data 5 to the rendering server 203, but does not send the ID corresponding to the electronic device 100. After the rendering server 203 generates the map image 5 based on the map data 5, the rendering server 203 may send the map image 5 to the interaction server 201. Then, the interaction server 201 sends the map image 5 to the electronic device 100.

S1011: The electronic device 100 displays the map image 5.

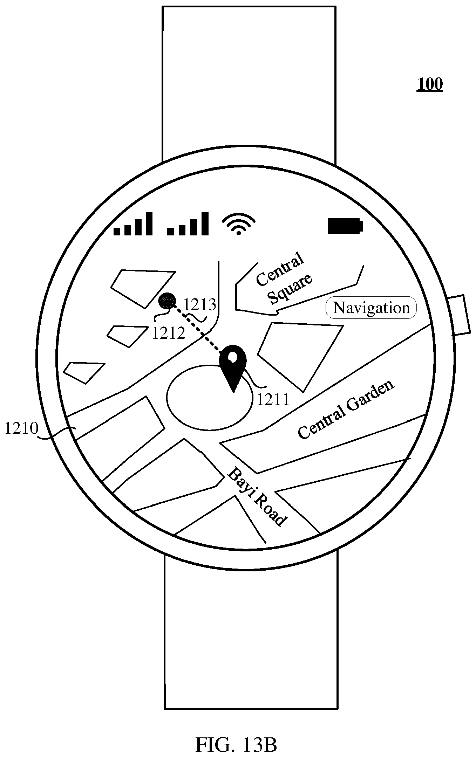

For example, as shown in FIG. 13B, the coordinate information 5 is the same as the coordinate information 1, and the electronic device 100 may display a user interface 1210. The user interface 1210 may include an identifier 1211 of the coordinate information 1 corresponding to the geographical location of the electronic device 200, an identifier 1212 of the coordinate information 2 corresponding to the geographical location of the electronic device 100, and a navigation route identifier 1213.

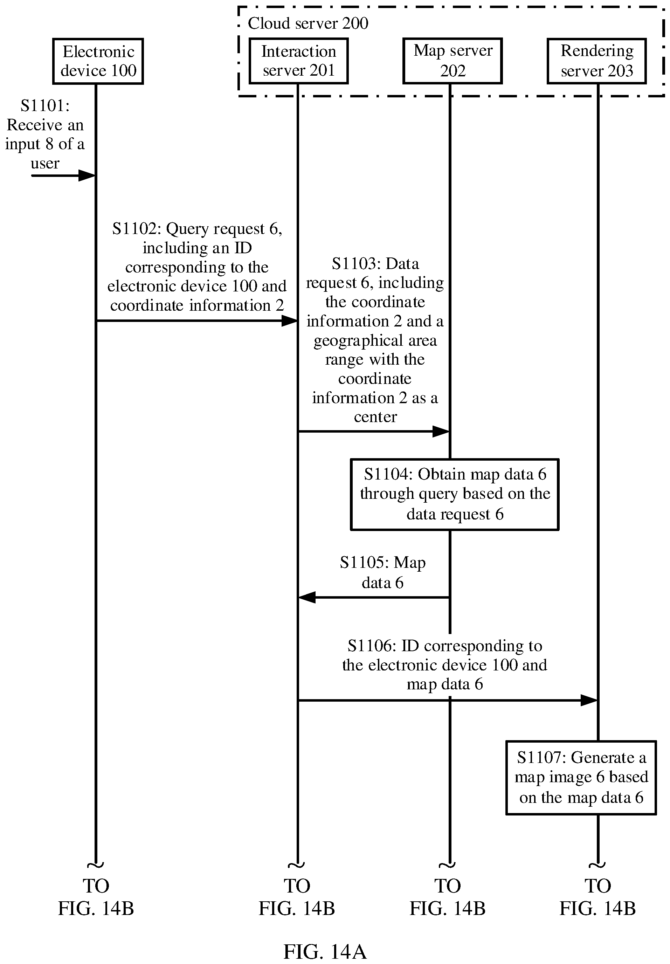

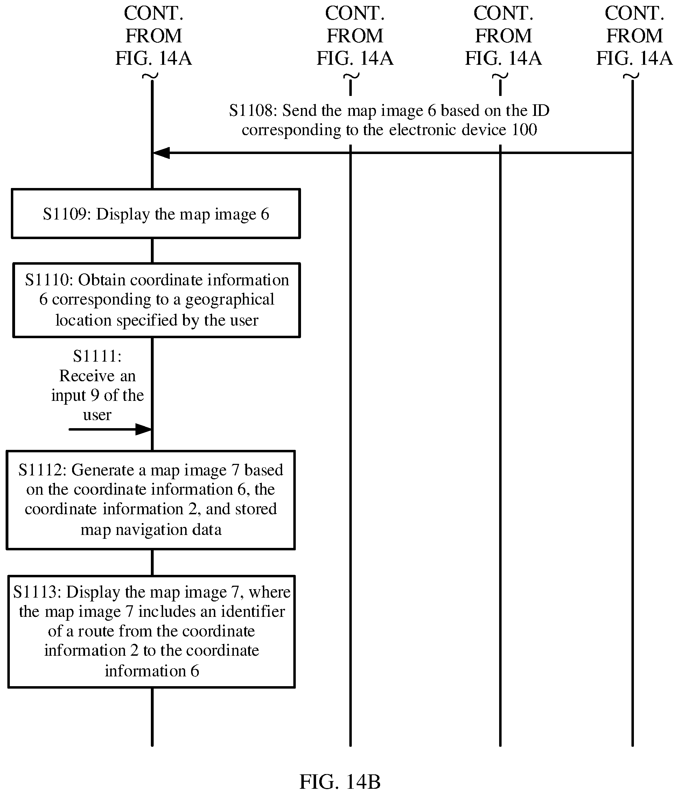

**FIG. 14A** **and** **FIG. 14B** **show another map display method according to an embodiment of this application.**

In some application scenarios, an electronic device 100 may be an electronic device that has a strong computing and processing capability and abundant internal memory space, for example, some smartwatches, smartphones, tablet computers, and desktop computers. The electronic device 100 may store map navigation data, and may generate a map navigation image through rendering based on the map navigation data.

The electronic device 100 may obtain coordinate information 2 corresponding to a geographical location of the electronic device 100. Then, the electronic device 100 may receive an input 8 of a user for displaying a map image of the geographical location of the electronic device 100. In response to the input 8, the electronic device 100 may send a query request 6 to an interaction server 201. The query request 6 may include the coordinate information 2 and an ID corresponding to the electronic device 100. Then, the interaction server 201 may send a data request 6 to a map server 202. The data request 6 may include the coordinate information 2 and a geographical area range with the coordinate information 2 as a center (for example, within a range with the coordinate information 2 as the center and 10 kilometers as a radius). In response to the data request 6, the map server 202 may obtain map data 6 through query. The map server 202 sends the map data 6 to the interaction server 201. The interaction server 201 may send, to a rendering server 203, the map data 6 and the identifier corresponding to the electronic device 100. The rendering server 203 may generate a map image 6 based on the map data 6, and may send the map image 6 to the electronic device 100 based on the ID corresponding to the electronic device 100. After receiving the map image 6, the electronic device 100 may display the map image 6.

Then, when the electronic device 100 obtains coordinate information 6 corresponding to a geographical location specified by the user, the electronic device 100 may receive an input 9 of the user for displaying a navigation route from the coordinate information 2 to the coordinate information 6. In response to the input 9, the electronic device 100 may generate a map image 7 through rendering based on the coordinate information 2, the coordinate information 6, and the map data stored in the electronic device 100. The electronic device 100 may display the map image 7. The map image 7 may include an identifier of the route from the coordinate information 2 to the coordinate information 6.

As shown in FIG. 14A and FIG. 14B, the method may include the following steps.

S1101: The electronic device 100 receives the input 8 of the user.

Specifically, the input 8 may be the input of the user for displaying the geographical location of the electronic device 100.

S1102: In response to the input 8, the electronic device 100 may send the query request 6 to the interaction server. The query request 6 may include the coordinate information 2 and the ID corresponding to the electronic device 100.

Specifically, before the electronic device 100 receives the input 8 of the user, the electronic device 100 may obtain the coordinate information 2.

For example, the electronic device 100 may receive an input of the user for obtaining the coordinate information 2 corresponding to the geographical location of the electronic device 100. In response to the input, the electronic device 100 may obtain, based on a GNSS positioning module, the coordinate information 2 corresponding to the geographical location of the electronic device 100.

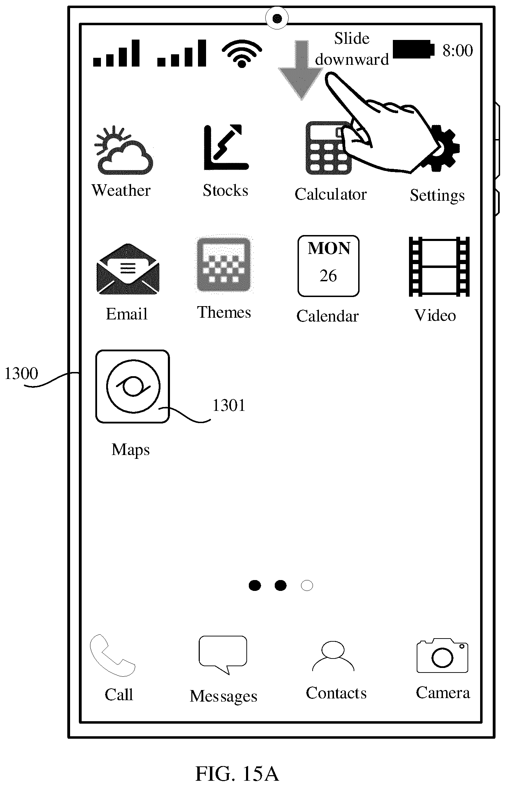

As shown in FIG. 15A, the electronic device 100 may display a home screen 1300. The home screen 1300 may display one or more application icons. The one or more application icons may include a Weather application icon, a Stocks application icon, a Calculator application icon, a Settings application icon, an Email application icon, a Themes application icon, a Music application icon, a Video application icon, a Maps application icon 1301, and the like.

Optionally, the home screen 1300 may further display a status bar, a page indicator, and a tray icon area. The status bar may include one or more signal strength indicators of a mobile communication signal (which may also be referred to as a cellular signal), a signal strength indicator of a wireless fidelity (wireless fidelity, Wi-Fi) signal, a battery status indicator, a time indicator, and the like. The page indicator may be configured to indicate a location relationship between a currently displayed page and another page. The tray icon area may include a plurality of tray icons (for example, a Dialer application icon, a Messages application icon, a Contacts application icon, and a Camera application icon). The tray icons remain visible during page transition. The foregoing page may also include a plurality of application icons and page indicators. The page indicator may not be a part of the page. The page indicator may exist alone. The foregoing tray icons are also optional. This is not limited in this application.

As shown in FIG. 15A, the electronic device 100 may receive a downward slide operation of the user on a status bar area. In response to the slide operation, the electronic device 100 may display a drop-down window.

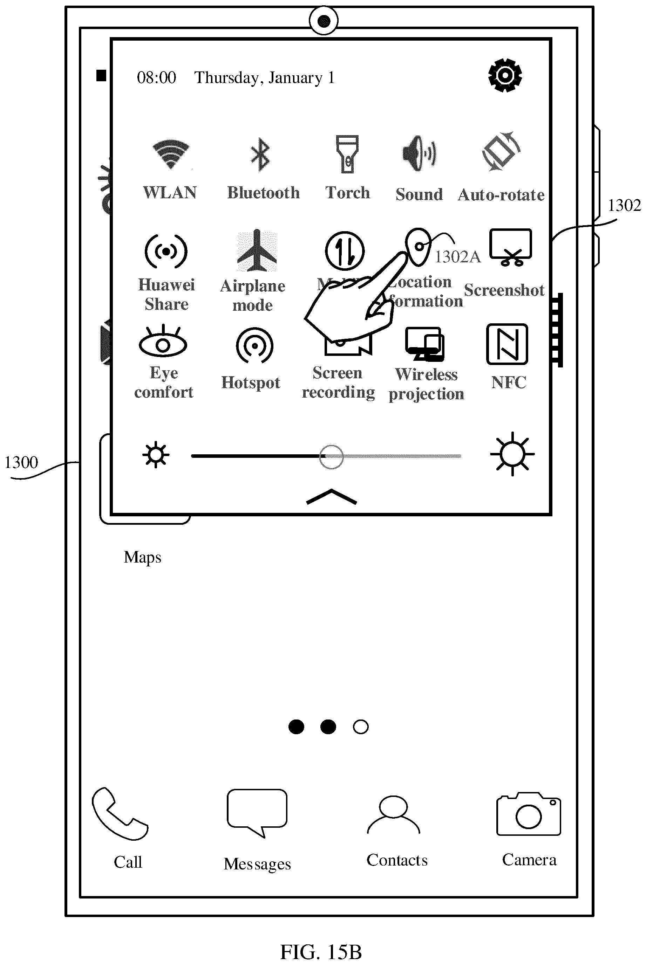

As shown in FIG. 15B, the electronic device 100 may display the drop-down window 1302. The drop-down window 1302 may include on/off controls of one or more functions (for example, an on/off control of a WLAN function, an on/off control of a Bluetooth function, an on/off control of a torch function, an on/off control of an auto-rotation function, and an on/off control 1302A of a location information function).

As shown in FIG. 15B, the electronic device 100 may receive a touch operation of the user on the on/off control 1302A of the location information function, and obtain the coordinate information 2 corresponding to the geographical location of the electronic device 100.

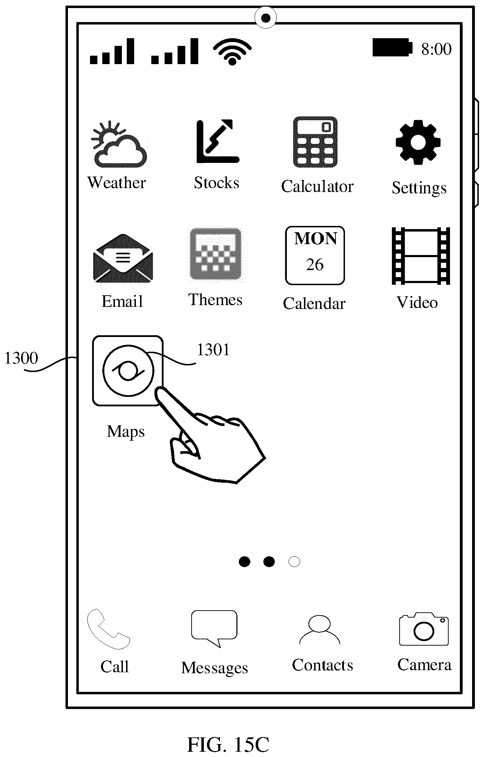

Then, as shown in FIG. 15C, the electronic device 100 may receive a touch operation (which may also be referred to as the input 8, for example, a tap) of the user on the Maps application icon 1301.

S1103: In response to the query request 6, the interaction server 201 may send the data request 6 to the map server 202. The data request 6 may include the coordinate information 2 and the geographical area range with the coordinate information 2 as the center (for example, within the range with the coordinate information 2 as the center and 10 kilometers as the radius).

S 1104: The map server 202 obtains the map data 6 through query based on the data request 6.

S1105: The map server 202 sends the map data 6 to the interaction server 201.

S1106: After receiving the map data 6, the interaction server 201 may send, to the rendering server 203, the ID corresponding to the electronic device 100 and the map data 6.

S 1107: The rendering server 203 may generate the map image 6 based on the map data 6.

S1008: The rendering server 203 may send the generated map image 6 to the electronic device 100 based on the ID corresponding to the electronic device 100.

In a possible implementation, the interaction server 201 may send the map data 6 to the rendering server 203, but does not send the ID of the electronic device 100. After the rendering server 203 generates the map image 6 based on the map data 6, the rendering server 203 may send the map image 6 to the interaction server 201. Then, the interaction server 201 sends the map image 6 to the electronic device 100.

S1009: The electronic device 100 displays the map image 6.

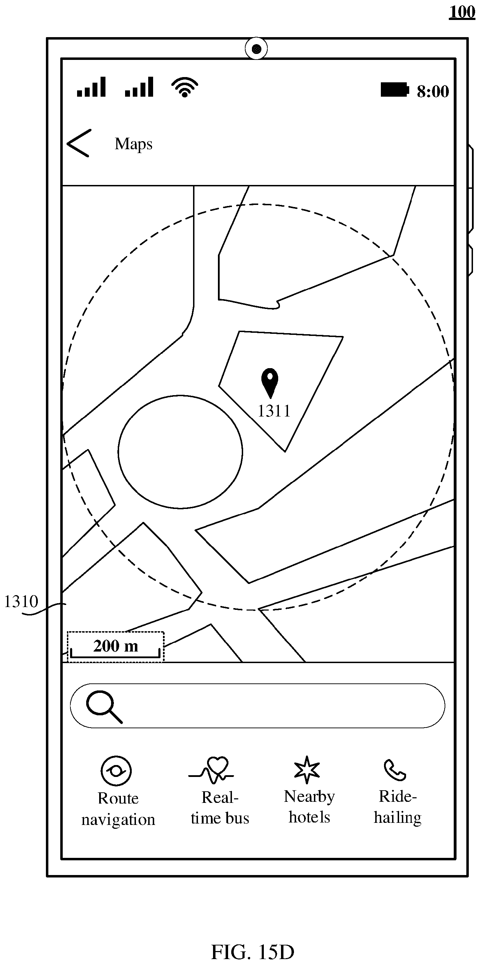

For example, as shown in FIG. 15D, the electronic device 100 may display a map interface 1310. The map interface 1310 may include an identifier 1311 corresponding to the coordinate information 2. The identifier 1311 may indicate the geographical location of the electronic device 100.

S1110: The electronic device 100 obtains the coordinate information 6 corresponding to the geographical location specified by the user.

S 1111: The electronic device 100 may receive the input 9 of the user.

Specifically, the input 9 may be the input of the user for displaying the navigation route from the coordinate information 2 to the coordinate information 6.

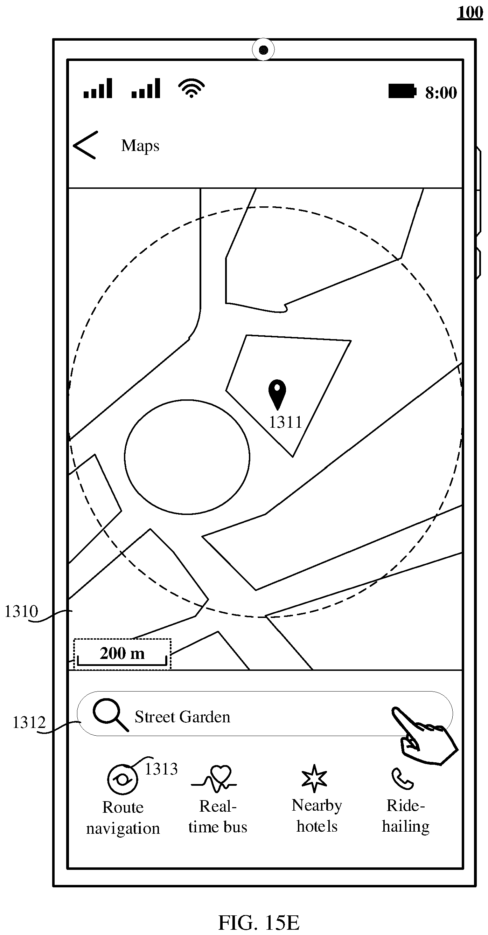

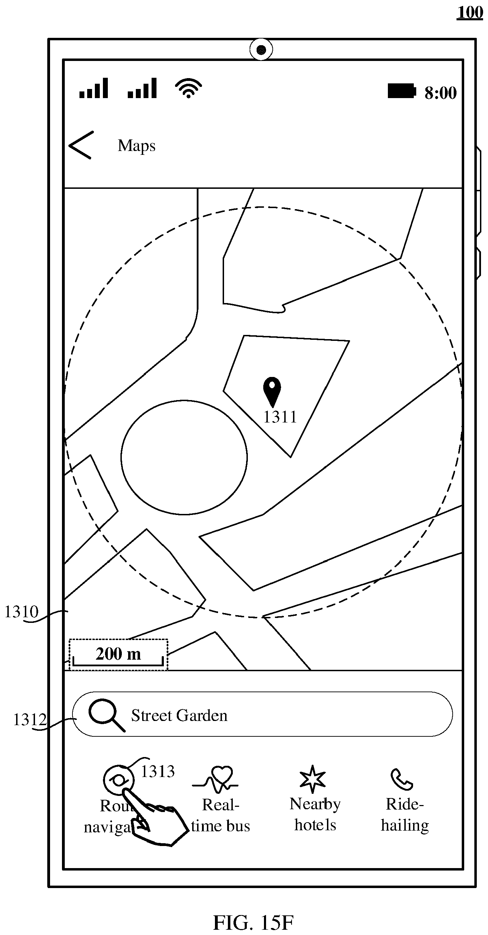

For example, as shown in FIG. 15E and FIG. 15F, the map interface 1310 may include an input box 1312 and a "Route navigation" control 1313. The electronic device 100 may receive an input of the user based on the input box 1312. In response to the input, the electronic device 100 may receive a name of the geographical location specified by the user, for example, "Street Garden". The electronic device 100 may obtain, based on the map data stored in the electronic device 100, the coordinate information 6 corresponding to "Street Garden". Then, the electronic device 100 may receive a touch operation (which may also be referred to as the input 9, for example, a tap) of the user on the "Route navigation" control 1313.

S1112: The electronic device 100 generates the map image 7 through rendering based on the coordinate information 6, the coordinate information 2, and the map navigation data stored in the electronic device 100.

Specifically, the electronic device 100 may include a navigation module, and the navigation module may be configured to generate a map image including an identifier of a route from a place of departure to a destination. The navigation module may be included in a specified application, or may be a software development kit (software development kit, SDK), or may be a system module preset in the electronic device 100. When the electronic device 100 responds to the received input 9, the electronic device 100 may invoke the navigation module to generate the map image 7 through rendering based on the coordinate information 6, the coordinate information 2, and the map navigation data stored in the electronic device 100.

S1113: The electronic device 100 may display the map image 7. The map image 7 may include the identifier of the route from the coordinate information 2 to the coordinate information 6.

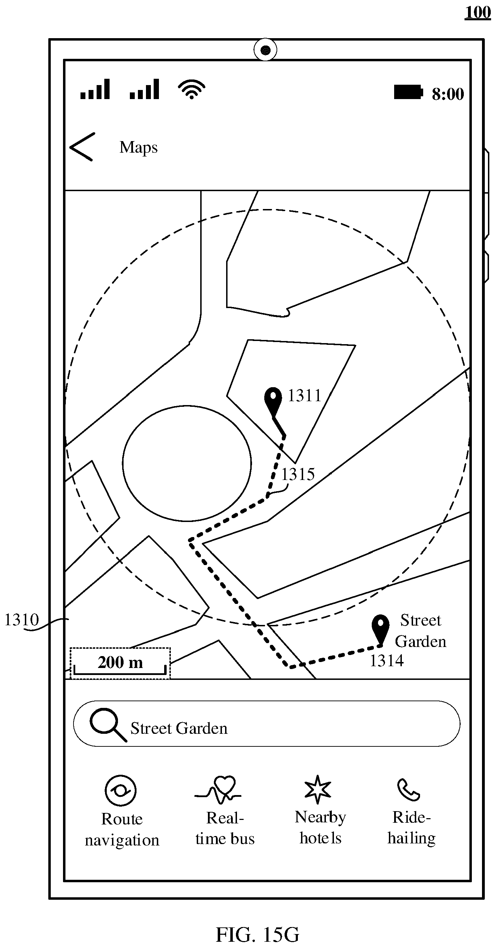

For example, as shown in FIG. 15G, the electronic device 100 may display, on the map interface 1310, the identifier 1311 corresponding to the coordinate information 2, an identifier 1314 corresponding to the coordinate information 6, and the identifier 1315 of the route from the coordinate information 2 to the coordinate information 6.

**The following describes a software structure according to an embodiment of this application.**

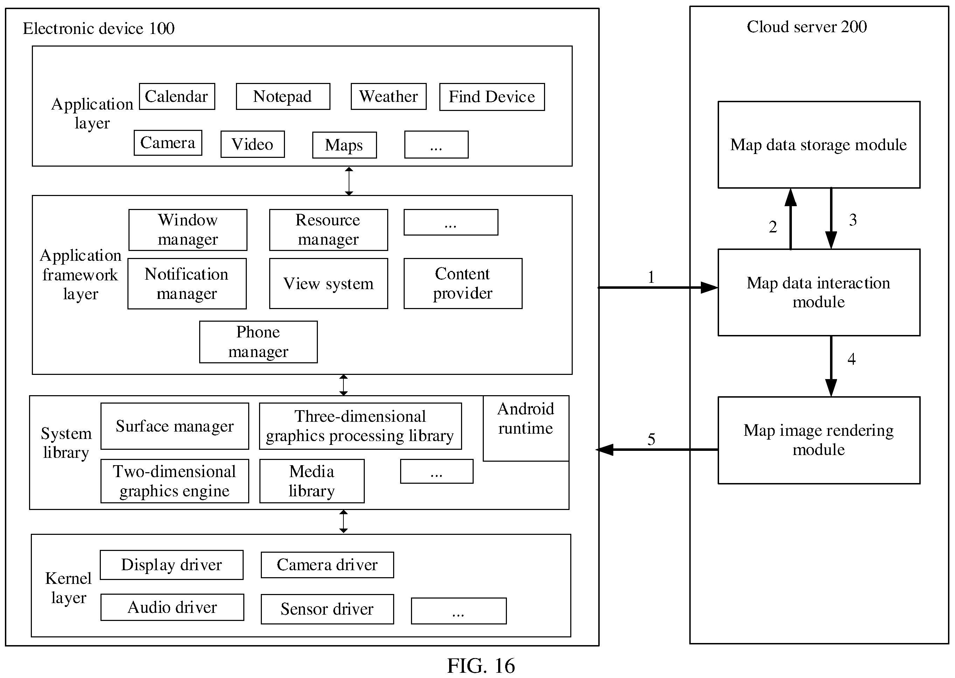

FIG. 16 is an example of a schematic diagram of a software structure according to an embodiment of this application.

As shown in FIG. 16, the software structure may include a software module of an electronic device 100 and a software module of a cloud server 200. A software system of the electronic device 100 may use a layered architecture, an event-driven architecture, a microkernel architecture, a micro service architecture, or a cloud architecture. In this embodiment of the present invention, an Android system of the layered architecture is used as an example for describing the software structure of the electronic device 100.

In the layered architecture, software is divided into several layers, and each layer has a clear role and task. The layers communicate with each other through a software interface. In some embodiments, the Android system is divided into four layers from top to bottom: an application layer, an application framework layer, Android runtime (Android runtime) and a system library, and a kernel layer.

The application layer may include a series of application packages. The application packages may include applications such as Calendar, Notepad, Weather, Find Device, Camera, Video, and Maps.

The application framework layer provides an application programming interface (application programming interface, API) and a programming framework for an application at the application layer. The application framework layer includes some predefined functions.

The application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application running in the background, or a notification that appears on a screen in a form of a dialog window. For example, text information is displayed in the status bar, a prompt tone is made, the electronic device vibrates, or an indicator light flashes.

The Android runtime includes a kernel library and a virtual machine. The Android runtime is responsible for scheduling and management of the Android system.

The kernel library includes two parts: one part is a function that needs to be invoked by a Java language, and the other part is a kernel library of Android.

The application layer and the application framework layer are run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The software module in the cloud server 200 may include a map data interaction module, a map data storage module, and a map image rendering module. The map data interaction module may perform data interaction with the electronic device 100, the map data storage module, and the map image rendering module. The map data storage module may store map data of one or more areas. The map data storage module may receive a data request sent by the map data interaction module, and obtain specified map data through query based on the data request. The map image rendering module may render and generate a specified map image based on the specified map data sent by the map data interaction module.

As shown in FIG. 16, the map data interaction module may receive a specified query request from the electronic device 100. The specified query request may include specified coordinate information and an ID corresponding to the electronic device 100. In response to the specified query request, the map data interaction module may send the specified data request to the map data storage module. The specified data request may include the specified coordinate information and a specified geographical area range with the specified coordinate information as a center. After receiving the specified data request, the map data storage module may obtain the specified map data through query based on the specified data request. The map data storage module may send the specified map data to the map data interaction module. Then, the map data interaction module may send the specified map data to the map image rendering module. The map image rendering module may generate the specified map image based on the specified map data. Then, the map image rendering module may send the specified map image to the electronic device 100 for display. For a specific description of the foregoing process, refer to the description in the foregoing embodiment. Details are not described herein again.

In a possible implementation, the electronic device 100 may receive an input of a user, and in response to the input of the user, obtain a geographical name corresponding to a specified geographical location. In this case, a query request sent by the electronic device 100 to an interaction server 201 includes the geographical name. The interaction server 201 sends the geographical name to a map server 202. The map server 202 obtains, based on the geographical name, coordinate information corresponding to the geographical name, and obtains corresponding map data based on the coordinate information. The map server 202 may send the map data to a rendering server 203 through the interaction server 201. Then, the rendering server 203 may generate, based on the map data, a map image of a geographical location specified by the user, and send the map image to the electronic device 100 for display. When the electronic device 100 has a network communication capability and can communicate with the cloud server 200, for a method for displaying the map image by the electronic device 100, refer to the description in the embodiment shown in FIG. 4. When the electronic device 100 does not have a network communication capability and cannot communicate with the cloud server 200, for a method for displaying the map image by the electronic device 100 based on the coordinate information, refer to the description in the embodiment shown in FIG. 6A and FIG. 6B. Details are not described herein again.

According to the context, the term "when" used in the foregoing embodiments may be interpreted as a meaning of "if", "after", "in response to determining", or "in response to detecting". Similarly, based on the context, phrases "when it is determined that" or "if the (described condition or event) is detected" may be interpreted as "if it is determined that" or "in response to determining" or "when the (described condition or event) is detected" or "in response to detecting the (described condition or event)".

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments may be implemented by a computer program by instructing related hardware. The program may be stored in the computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

## Claims

1. A map display method, comprising:
receiving, by a first electronic device, a first operation;
in response to the first operation, sending, by the first electronic device, a first query request to a cloud server, wherein the first query request comprises first geographical information of a second electronic device, and the first geographical information is used to generate a first map image;
receiving, by the first electronic device, the first map image; and
displaying, by the first electronic device, the first map image.

2. The method according to claim 1, wherein the first query request is used to request the cloud server to generate the first map image based on the first geographical information.

3. The method according to claim 1, wherein the first operation acts on a map application, an interface of a device search function, or an interface of locating a current location of the first electronic device.

4. The method according to claim 1, wherein the first geographical information comprises a geographical location or longitude and latitude information.

5. The method according to claim 1, wherein the second electronic device and the first electronic device are different electronic devices.

6. The method according to claim 1, wherein the second electronic device and the first electronic device are a same electronic device.

7. The method according to claim 1, wherein the method further comprises:
receiving, by the first electronic device, a second operation;
in response to the second operation, obtaining second geographical information, and sending, by the first electronic device, a first instruction to the cloud server, wherein the first instruction comprises the first geographical information and the second geographical information, and the first instruction is used to trigger the cloud server to generate a second map image based on the first geographical information and the second geographical information;
receiving, by the first electronic device, the second map image; and
displaying, by the first electronic device, the second map image, wherein the second map image comprises an identifier of a route from the second geographical information to the first geographical information.

8. The method according to claim 1, wherein the method further comprises:
receiving, by the first electronic device, a third operation;
in response to the third operation, obtaining first percentage information and third geographical information, and sending, by the first electronic device, a second instruction to the cloud server, wherein the second instruction comprises the third geographical information and the first percentage information, and the second instruction is used to trigger the cloud server to generate a third map image based on the third geographical information and the first percentage information;
receiving, by the first electronic device, the third map image; and
displaying, by the first electronic device, the third map image, wherein the third map image is a scaled-up or scaled-down map image based on the first map image.

9. The method according to claim 1, wherein the method further comprises:
receiving, by the first electronic device, a fourth operation;
in response to the fourth operation, sending, by the first electronic device, a third instruction to the cloud server, wherein the third instruction comprises first displacement information and fourth geographical information, and the third instruction is used to trigger the cloud server to generate a fourth map image based on the first displacement information and the fourth geographical information;
receiving, by the first electronic device, the fourth map image; and
displaying, by the first electronic device, the fourth map image, wherein the fourth map image is a map image obtained by moving the first map image.

10. The method according to claim 1, wherein the method further comprises:
storing, by the first electronic device, the first map image.

11. The method according to claim 1, wherein before the receiving, by a first electronic device, a first operation, the method further comprises:
logging in to a first account on the first electronic device; and
logging in to a second account on the second electronic device, wherein
the first account and the second account are a same account, or the first account and the second account are associated accounts.

12. The method according to claim 1, wherein the method further comprises:
receiving, by the first electronic device, a fifth operation;
in response to the fifth operation, sending, by the first electronic device, a second query request to the cloud server, wherein the second query request comprises a device identifier of the second electronic device, the device identifier of the second electronic device is used to obtain the first geographical information, and the second query request is used to trigger the cloud server to generate a fifth map image based on the first geographical information;
receiving, by the first electronic device, the fifth map image; and
displaying, by the first electronic device, the fifth map image, wherein the fifth map image comprises a geographical location of the second electronic device.

13. A communication system, comprising a first electronic device and a cloud server,
wherein
the first electronic device is configured to receive a first operation;
the first electronic device is further configured to: in response to the first operation, send a first query request to the cloud server, wherein the first query request comprises first geographical information of a second electronic device;
the cloud server is configured to: in response to the first query request, generate a first map image based on the first geographical information;
the cloud server is further configured to send the first map image to the first electronic device; and
the first electronic device is further configured to display the first map image after receiving the first map image.

14. The system according to claim 13, wherein the first operation acts on a map application, an interface of a device search function, or an interface of locating a current location of the first electronic device.

15. The system according to claim 13, wherein the first geographical information comprises a geographical location or longitude and latitude information.

16. The system according to claim 13, wherein the second electronic device and the first electronic device are different electronic devices.

17. The system according to claim 13, wherein the second electronic device and the first electronic device are a same electronic device.

18. The system according to claim 13, wherein the first electronic device is further configured to receive a second operation;
the first electronic device is further configured to: in response to the second operation, obtain second geographical information, and send a first instruction to the cloud server, wherein the first instruction comprises the first geographical information and the second geographical information;
the cloud server is further configured to: in response to the first instruction, generate a second map image based on the first geographical information and the second geographical information;
the cloud server is further configured to send the second map image to the first electronic device; and
the first electronic device is further configured to display the second map image after receiving the second map image, wherein the second map image comprises an identifier of a route from the second geographical information to the first geographical information.

19. The system according to claim 13, wherein the first electronic device is further configured to receive a third operation;
the first electronic device is further configured to: in response to the third operation, obtain first percentage information and third geographical information, and send a second instruction to the cloud server, wherein the second instruction comprises the third geographical information and the first percentage information;
the cloud server is further configured to: in response to the second instruction, generate a third map image based on the third geographical information and the first percentage information;
the cloud server is further configured to send the third map image to the first electronic device; and
the first electronic device is further configured to display the third map image after receiving the third map image, wherein the third map image is a scaled-up or scaled-down map image based on the first map image.

20. The system according to claim 13, wherein the first electronic device is further configured to receive a fourth operation;
the first electronic device is further configured to: in response to the fourth operation, send a third instruction to the cloud server, wherein the third instruction comprises first displacement information and fourth geographical information;
the cloud server is further configured to: in response to the third instruction, generate a fourth map image based on the first displacement information and the fourth geographical information;
the cloud server is further configured to send the fourth map image to the first electronic device; and
the first electronic device is further configured to display the fourth map image after receiving the fourth map image, wherein the fourth map image is a map image obtained by moving the first map image.

21. The system according to claim 13, wherein the first electronic device is further configured to store the first map image.

22. An electronic device, wherein the electronic device is a first electronic device, comprising a display, a communication apparatus, a memory, a processor coupled to the memory, a plurality of applications, and one or more programs, wherein when the processor executes the one or more programs, the first electronic device is enabled to implement the method according to any one of claims 1 to 12.

23. A computer storage medium, wherein the storage medium stores a computer program, the computer program comprises executable instructions, and when the executable instructions are executed by a processor, the processor is enabled to perform the method according to any one of claims 1 to 12.

24. A computer program product, wherein when the computer program product is run on a first electronic device, the first electronic device is enabled to perform the method according to any one of claims 1 to 12.
